# EUROPEAN PATENT APPLICATION

(11) **EP 4 624 066 A1**
(43) Date of publication of application: **01.10.2025**
(21) Application number: 23944340.1
(22) Date of filing: 05.07.2023
(51) Int. Cl.: B21D 19/08, B21C 37/29, B21D 28/10, B21D 28/24, B23K 26/36, B26F 1/16

(54) **WORKPIECE MACHINING METHOD, MACHINE TOOL, AND PROGRAM**

(71) Applicant: Yamazaki Mazak Corporation, Niwa-gun, Aichi 480-0197 (JP)
(72) Inventor: HIRAMATSU, Hiroki, Niwa-gun, Aichi 480-0197 (JP); ADACHI, Masatoshi, Niwa-gun, Aichi 480-0197 (JP)
(74) Representative: TBK
(86) International application number: PCT/JP2023/024908
(87) International publication number: WO 2025/009088

(57) **Abstract**

A workpiece processing method includes: a step of preparing a workpiece having a plate portion including a base material and a first coating layer that covers at least a portion of the base material, and a step of burring the plate portion. The step of burring the plate portion includes forming a through hole and a flange in a first region of the plate portion by moving a burring tool in a rotating state in a first direction, the first direction being defined as a direction from the base material toward the first coating layer. A step of removing the first coating layer from the first region of the plate portion is carried out prior to the step of burring the plate portion.

## Description

### Technical Field

The present invention relates to a workpiece processing method, a machine tool, and a program.

### Background Art

Burring is known as a technique of forming a through hole and a flange in a thin plate material, used to provide a sufficient thread height when thread-cutting, or to allow a pin or pipe to be fitted through a thin plate material.

A relevant technique is described in Patent Literature 1 that discloses a drilling tool. The drilling tool described in Patent Literature 1 is used for forming holes and bosses in a metal sheet or metal pipe wall. More specifically, the drilling tool is pressed against a metal sheet or metal pipe wall while being rotated at high speed. The frictional heating that occurs between the drilling tool and the metal sheet or metal pipe wall, and the friction pressure applied from the drilling tool to the metal sheet or metal pipe wall, melt the metal. This melting metal forms a boss at the same time as a hole is formed.

### Citation List

### Patent Literature

[PTL1] Japanese Examined Utility Model Publication No. Hei 5-6007

### Summary of Invention

### Technical Problem

An object of the present invention is to provide a workpiece processing method, a machine tool, and a program that enable favorable formation of through holes and flanges in a plate material having a coating layer, such as a layer formed by the plating of pure zinc or zinc alloy.

### Solution to Problem

A workpiece processing method according to some embodiments includes: preparing a workpiece having a plate portion including a base material and a first coating layer that covers at least a portion of the base material; and burring the plate portion. The burring of the plate portion includes forming a through hole and a flange in a first region of the plate portion by moving a burring tool in a rotating state in a first direction, the first direction being defined as a direction from the base material toward the first coating layer. The first coating layer is removed from the first region of the plate portion prior to the burring of the plate portion.

A machine tool according to some embodiments includes: a work holder configured to support a workpiece having a base material and a first coating layer that covers at least a portion of the base material; a machining head configured to support a burring tool in a manner rotatable about a rotation axis; a rotational driver configured to rotate the burring tool about the rotation axis; a mover configured to move the machining head relative to the work holder; a remover configured to remove a portion of the first coating layer from the workpiece; and a controller configured to control the rotational driver, the mover, and the remover. The controller is configured to implement: a removal mode in which the first coating layer is removed from a first region of the plate portion by sending a control command at least to the remover; and a burring mode in which the plate portion is burred by sending a control command at least to the rotational driver and the mover. The burring mode is a mode in which a through hole and a flange are formed in the first region from which the first coating layer has been removed, using the burring tool moving in a first direction in a rotating state, the first direction being defined as a direction from the base material toward the first coating layer.

A program according to some embodiments is a program for causing a machine tool to execute a workpiece processing method including: removing a first coating layer from a first region of a plate portion of a workpiece supported by a work holder, the workpiece having the plate portion including a base material and the first coating layer that covers at least a portion of the base material; and burring the plate portion after the first coating layer has been removed from the first region of the plate portion. The burring of the plate portion includes forming a through hole and a flange in the first region of the plate portion by moving the burring tool in a rotating state in a first direction, the first direction being defined as a direction from the base material toward the first coating layer.

### Effects of Invention

The present invention can provide a workpiece processing method, a machine tool, and a program that enable favorable formation of through holes and flanges in a plate material having a coating layer, such as a layer formed by the plating of pure zinc or zinc alloy.

### Brief Description of Drawings

[FIG. 1] FIG. 1 is a schematic cross-sectional diagram illustrating one example of a workpiece prepared in a preparation step.
[FIG. 2] FIG. 2 is a schematic cross-sectional diagram illustrating a removal step being carried out to remove a first coating layer from a first region of a plate portion.
[FIG. 3] FIG. 3 is a schematic cross-sectional diagram illustrating one example of the workpiece after the first coating layer has been removed from the first region of the plate portion.
[FIG. 4] FIG. 4 is a schematic cross-sectional diagram illustrating a burring tool moving toward the first region of the plate portion.
[FIG. 5] FIG. 5 is a schematic cross-sectional diagram illustrating the first region of the plate portion being burred.
[FIG. 6] FIG. 6 is a schematic cross-sectional diagram illustrating a tapping tool moving toward a through hole.
[FIG. 7] FIG. 7 is a schematic cross-sectional diagram illustrating internal threads being formed on a wall surface of the through hole.
[FIG. 8] FIG. 8 is a schematic cross-sectional diagram illustrating the state after the internal threads have been formed on the wall surface of the through hole.
[FIG. 9] FIG. 9 is a schematic cross-sectional diagram illustrating a fractured flange in a comparative example.
[FIG. 10] FIG. 10 is a schematic perspective diagram illustrating one example of the workpiece.
[FIG. 11] FIG. 11 is a schematic perspective diagram illustrating one example of the workpiece.
[FIG. 12] FIG. 12 is a schematic perspective diagram illustrating one example of the workpiece.
[FIG. 13] FIG. 13 is a schematic cross-sectional diagram illustrating a removal step being carried out to remove a first coating layer from a first region of a plate portion.
[FIG. 14] FIG. 14 is a schematic cross-sectional diagram illustrating a removal step being carried out using a chemical liquid.
[FIG. 15] FIG. 15 is a schematic cross-sectional diagram illustrating a removal step being carried out using a second tool.
[FIG. 16] FIG. 16 is a schematic perspective diagram illustrating one example of the burring tool.
[FIG. 17] FIG. 17 is a diagram illustrating a machine tool in the first embodiment.
[FIG. 18] FIG. 18 is a schematic cross-sectional diagram illustrating a case where a second wall exists as an obstacle between the laser head and the first region of the plate portion.
[FIG. 19] FIG. 19 is a diagram illustrating the machine tool in the first embodiment.
[FIG. 20] FIG. 20 is a diagram illustrating the machine tool in the first embodiment.
[FIG. 21] FIG. 21 is a diagram illustrating one example of a tool changer.
[FIG. 22] FIG. 22 is a diagram illustrating the machine tool in the first embodiment.
[FIG. 23] FIG. 23 is a flowchart showing an example of the workpiece processing method in the embodiment.
[FIG. 24] FIG. 24 is a diagram illustrating a part of the machine tool in the second embodiment.
[FIG. 25] FIG. 25 is an enlargement of one part of FIG. 24.
[FIG. 26] FIG. 26 is a diagram illustrating the machine tool in the second embodiment.
[FIG. 27] FIG. 27 is a diagram illustrating the machine tool in the second embodiment.
[FIG. 28] FIG. 28 is a diagram illustrating a part of the machine tool in the second embodiment.
[FIG. 29] FIG. 29 is a diagram illustrating a part of the machine tool in the second embodiment.
[FIG. 30] FIG. 30 is a diagram illustrating one example of a storage medium on which a program is recorded.

### Description of Embodiments

Hereinafter, a workpiece processing method, a machine tool 1, and a program 822 in one embodiment will be described with reference to the drawings. In the following description of the embodiment, parts and components that have identical functions are given the same reference numerals, and repetitive descriptions of these parts and components with the same reference numerals will be omitted.

### (First Embodiment)

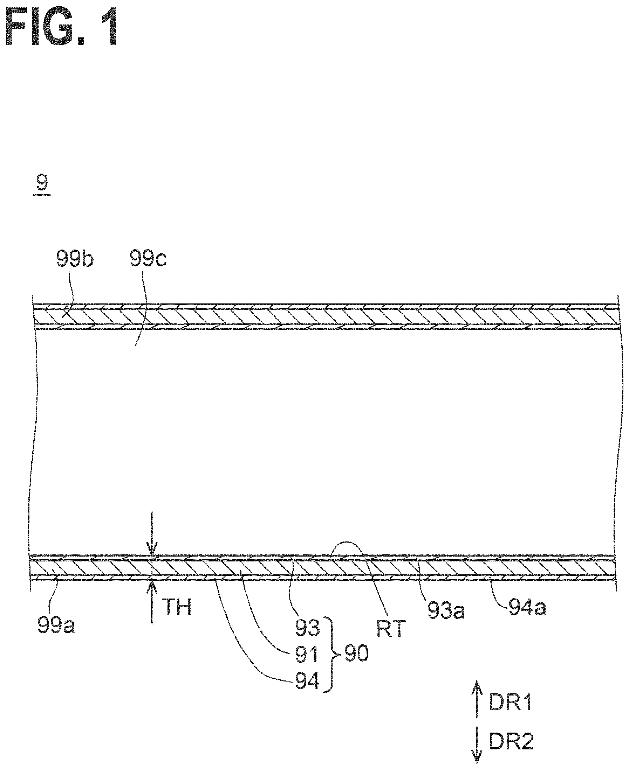

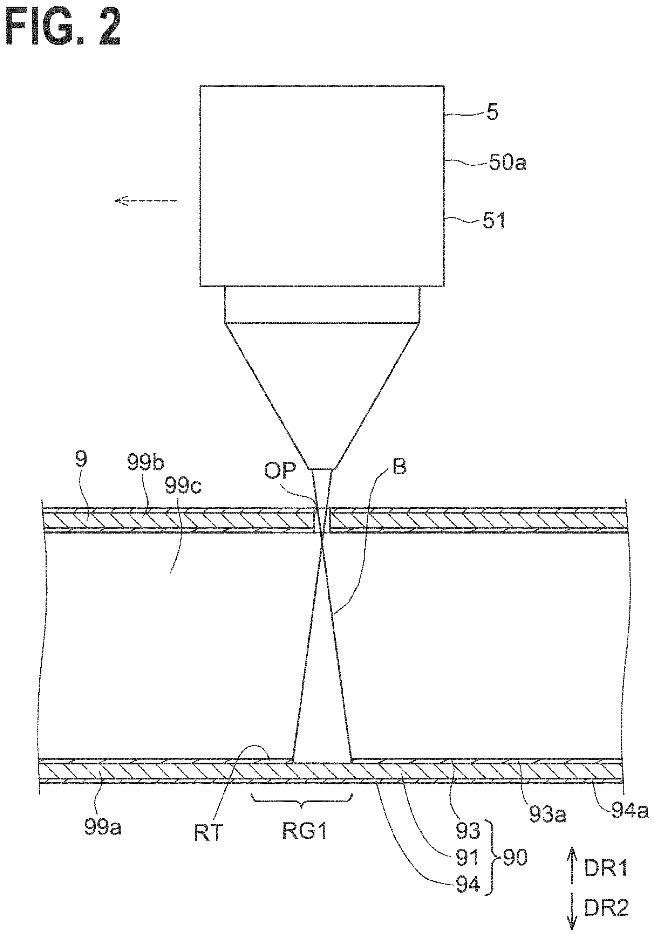

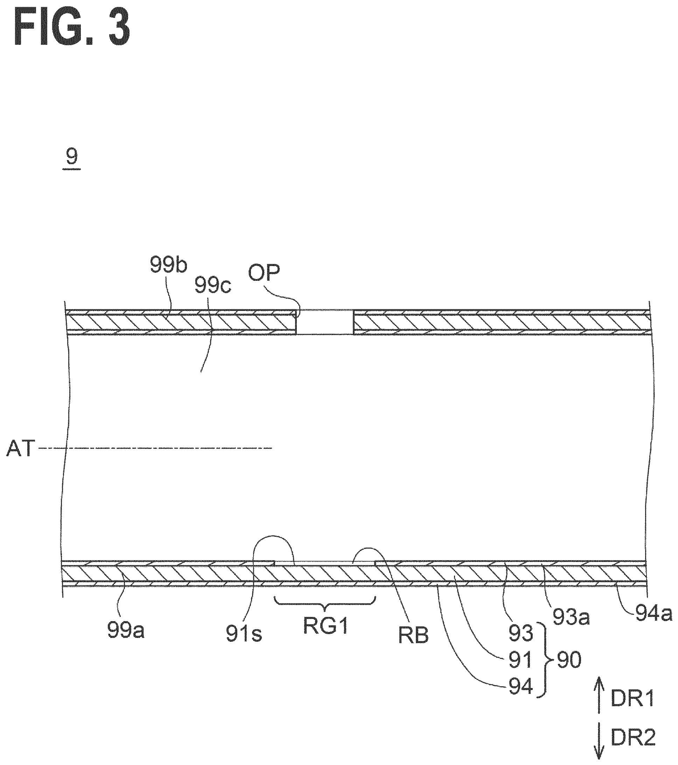

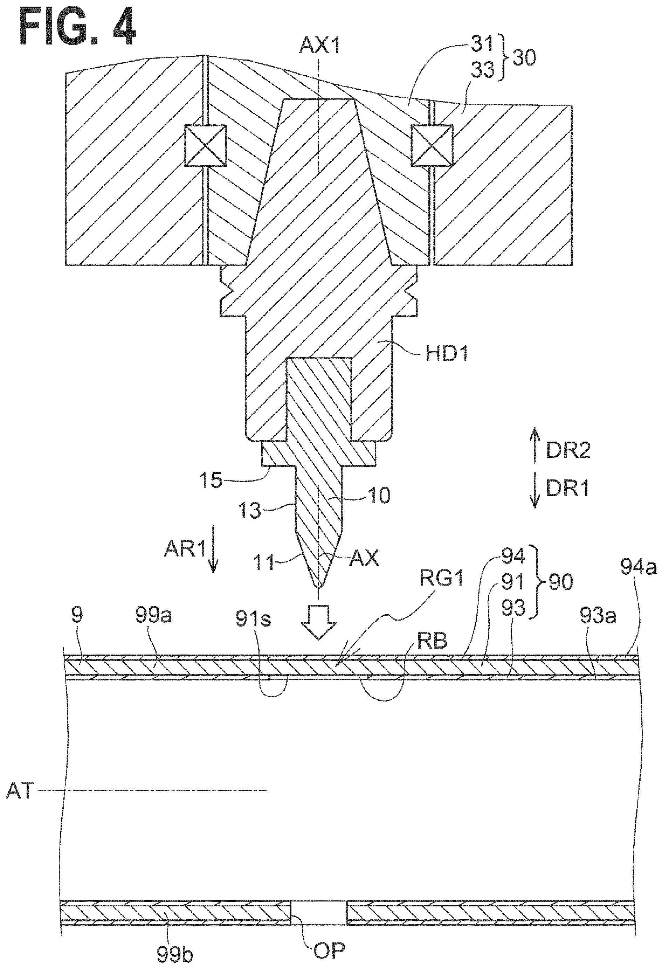

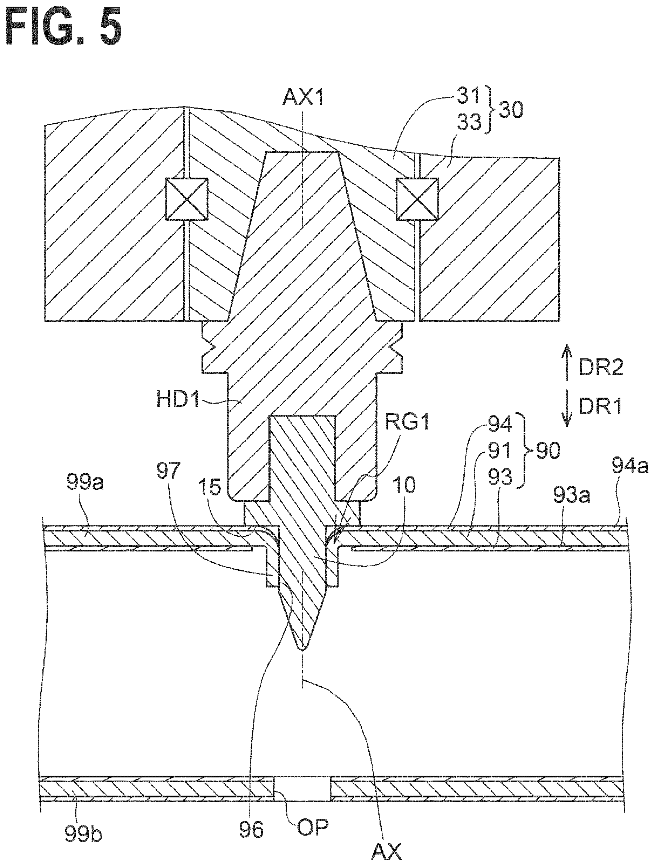

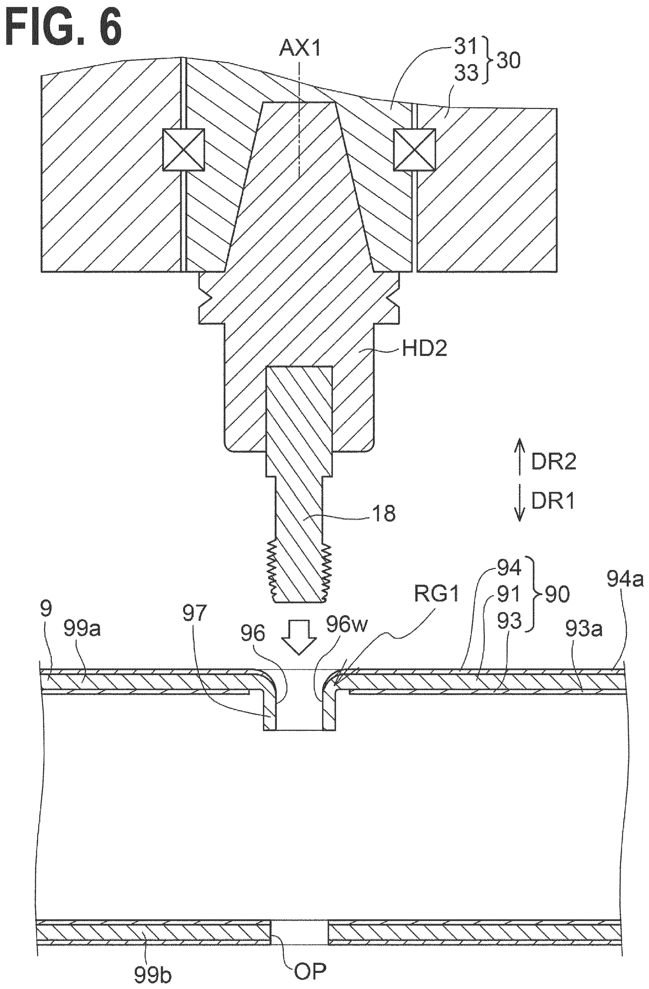

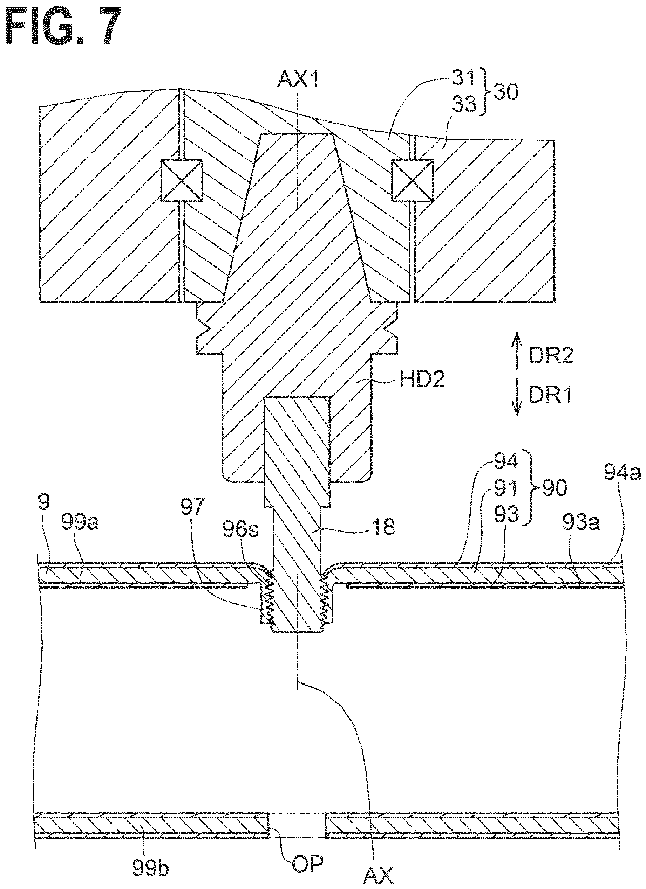

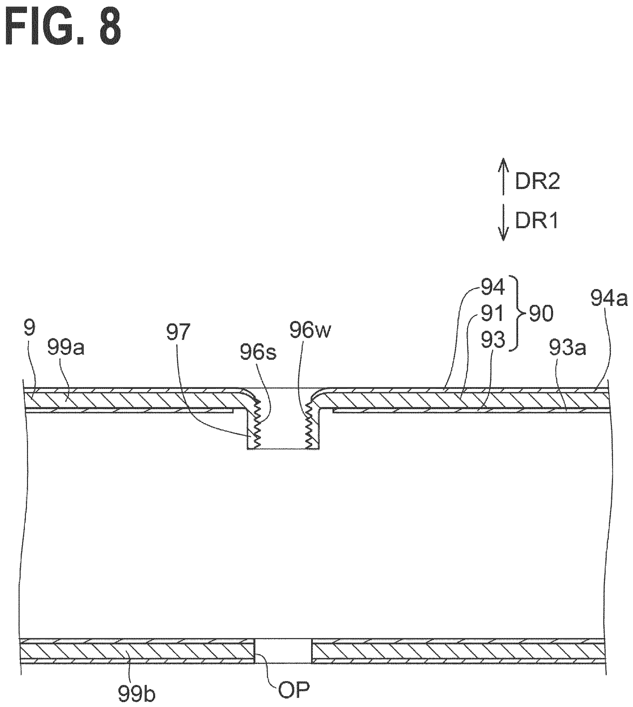

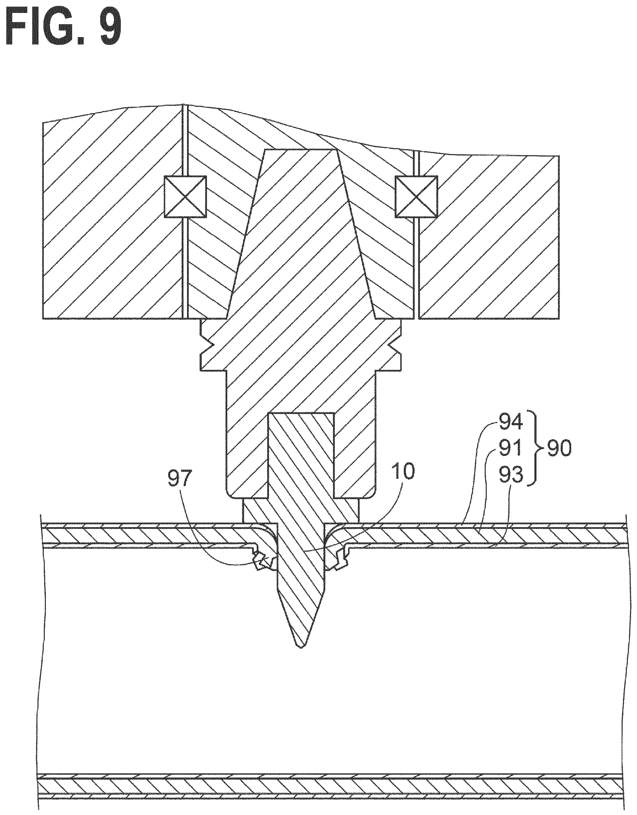

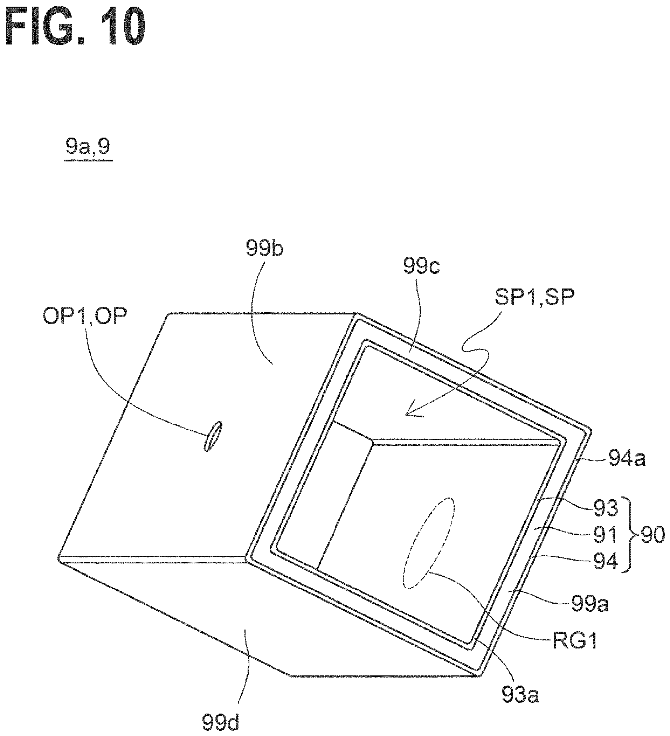

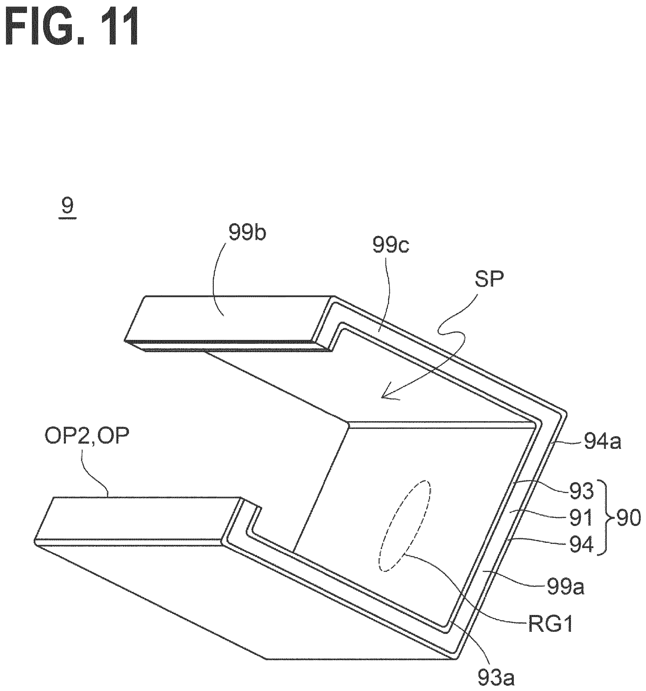

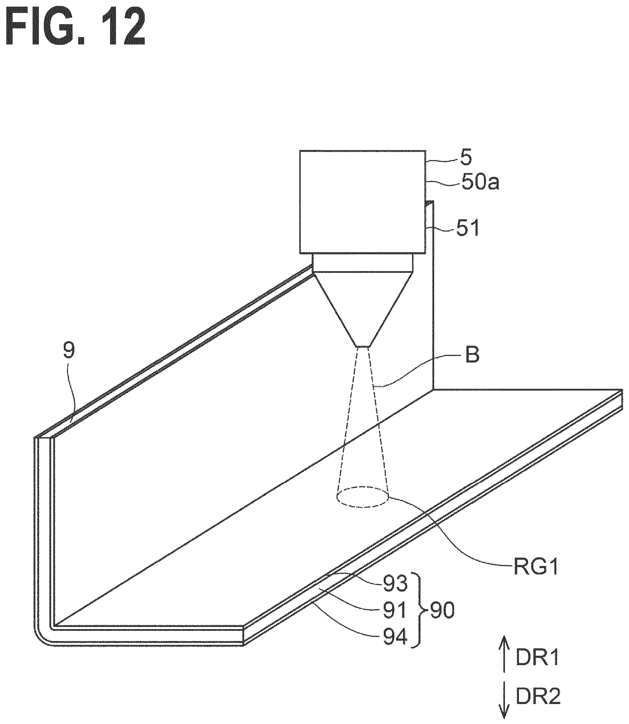

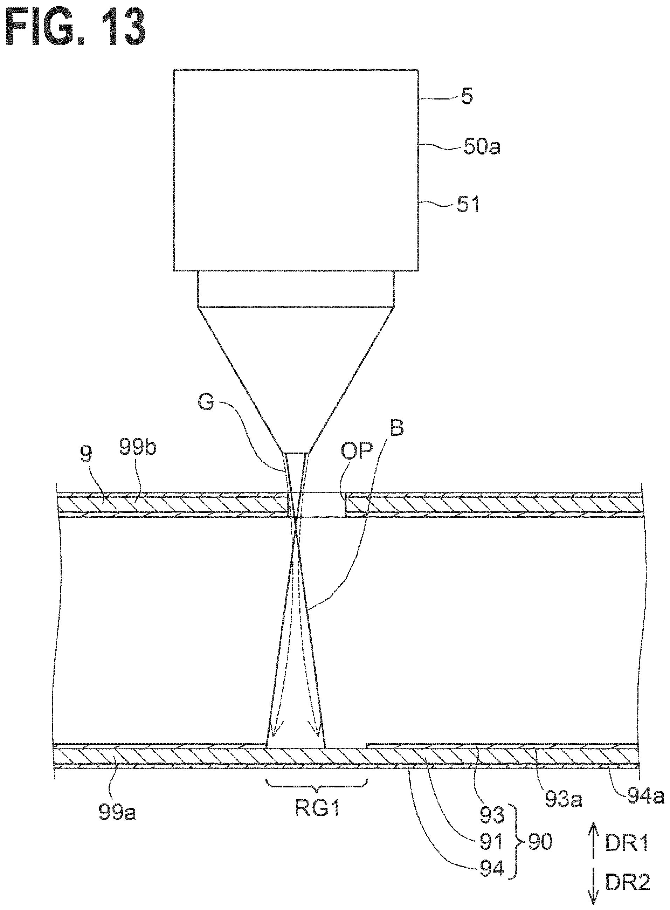

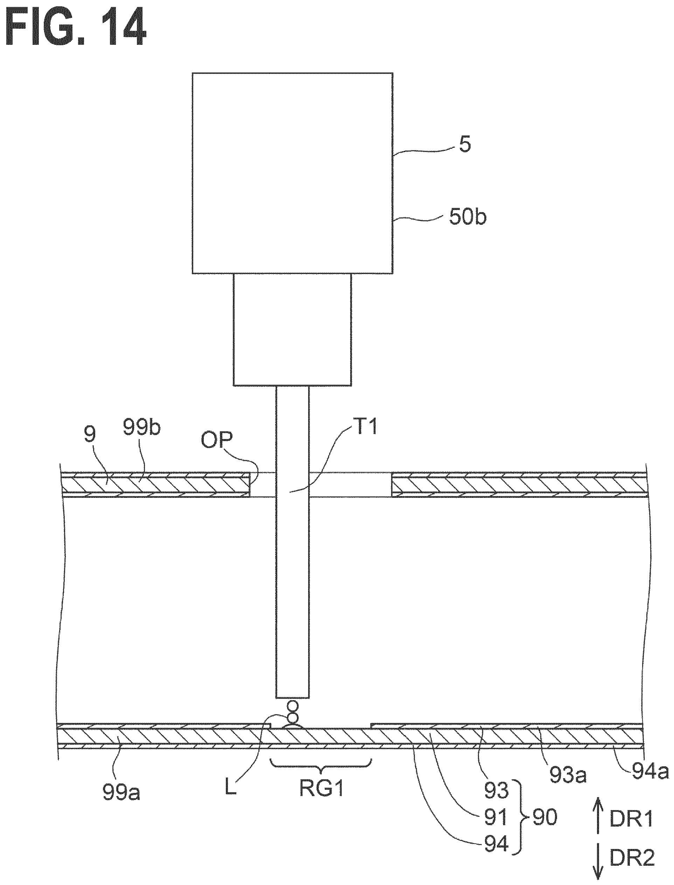

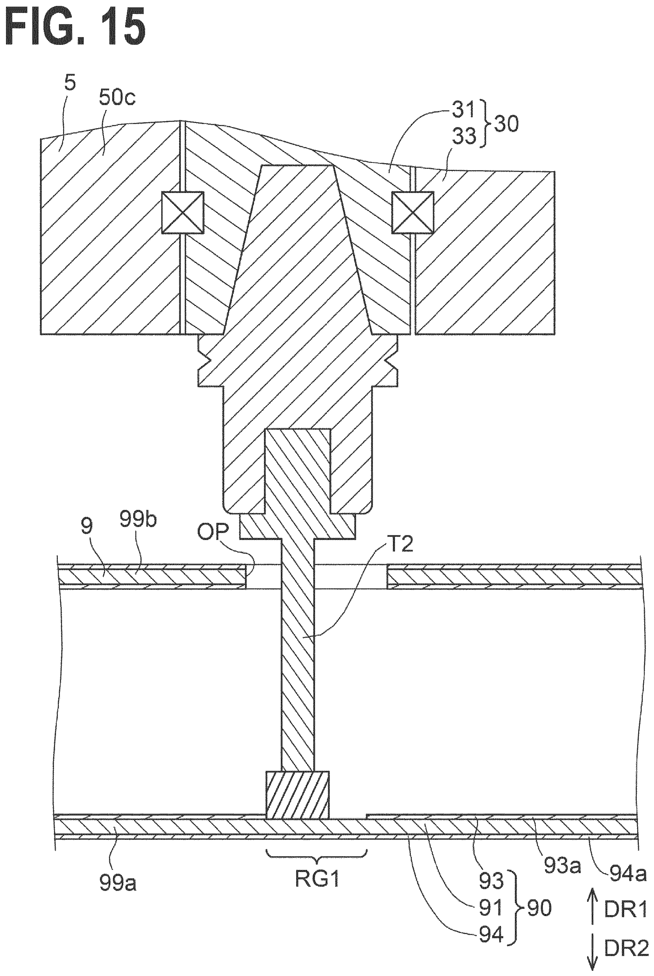

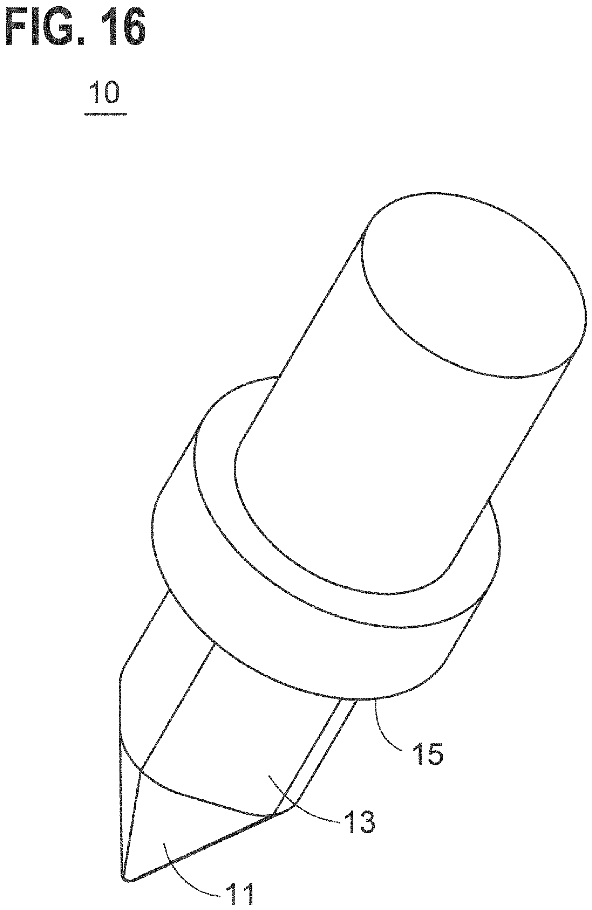

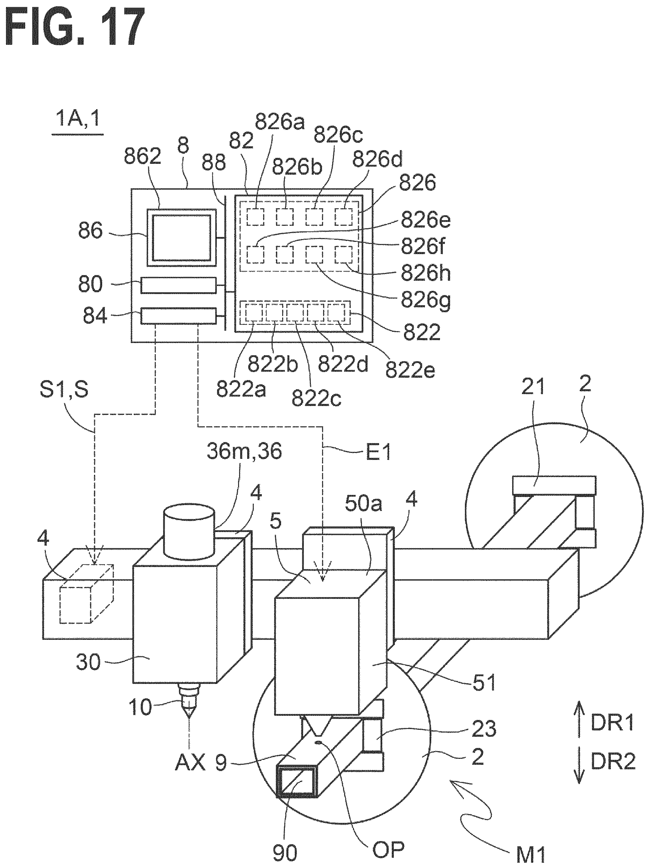

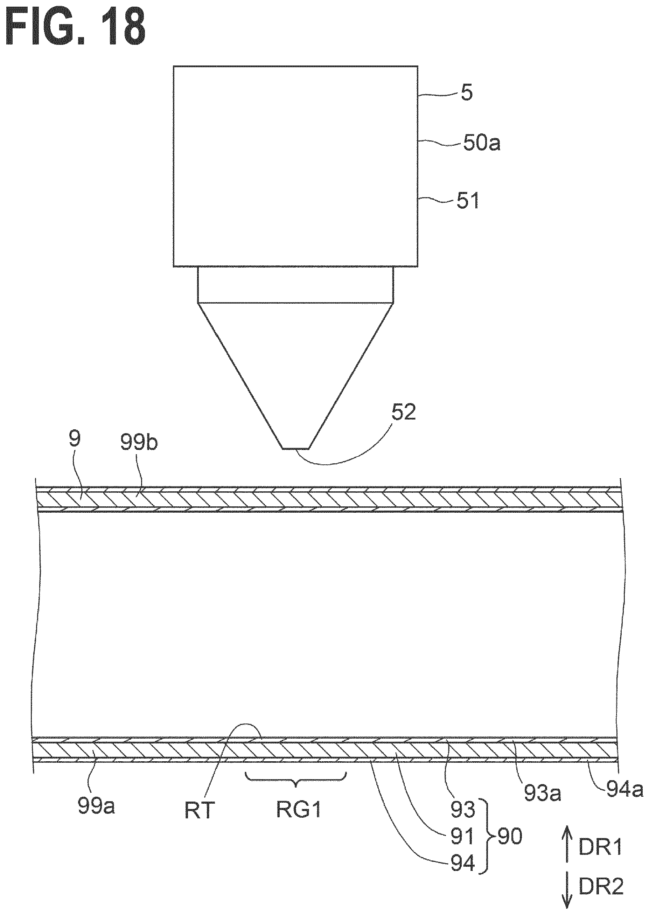

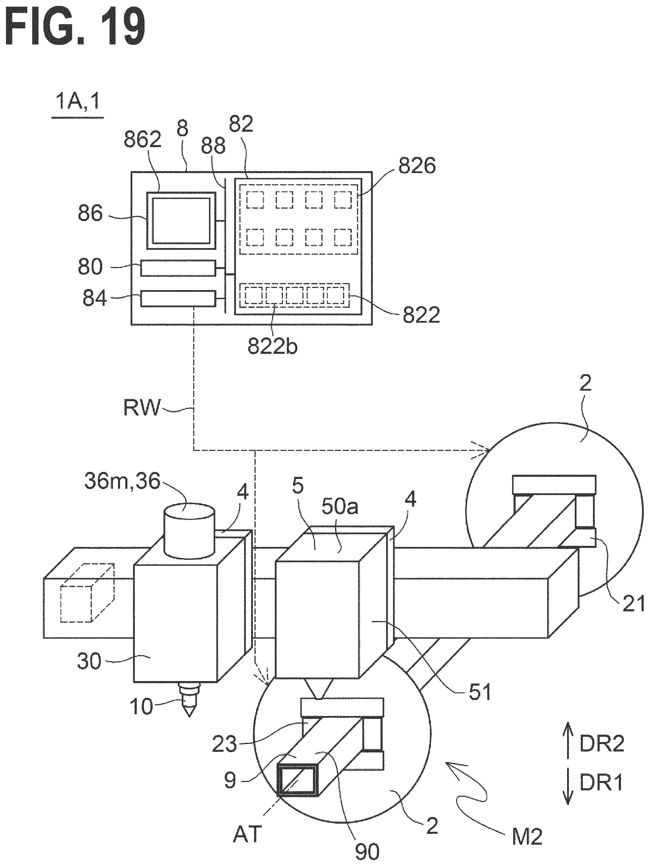

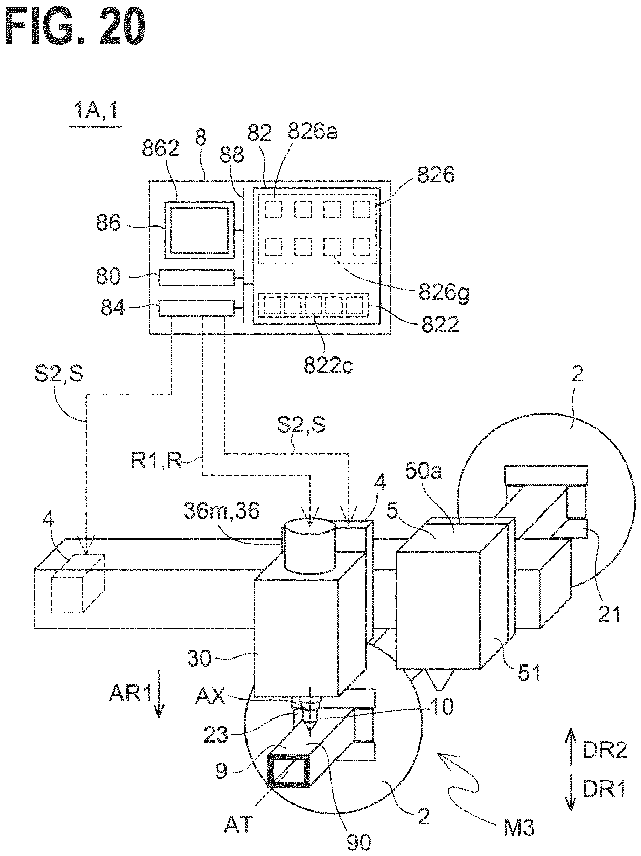

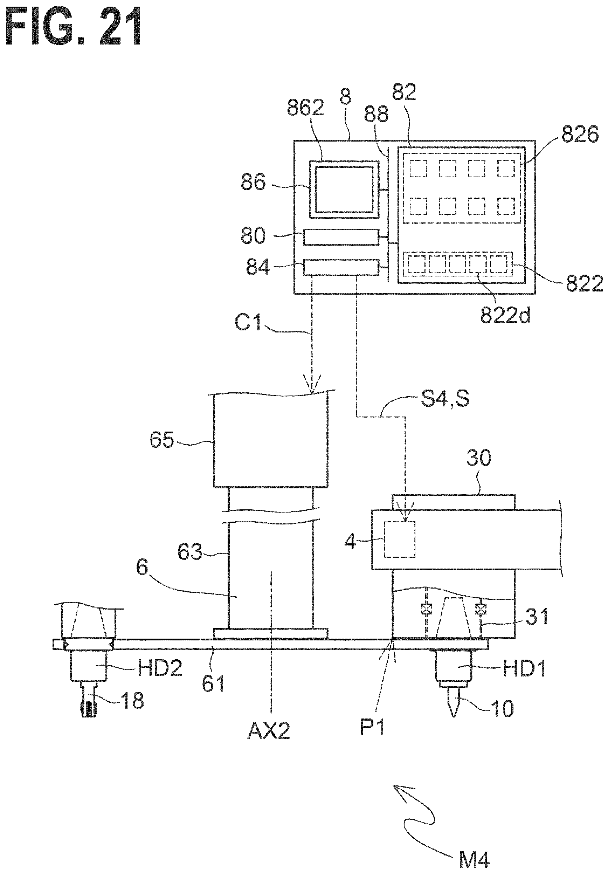

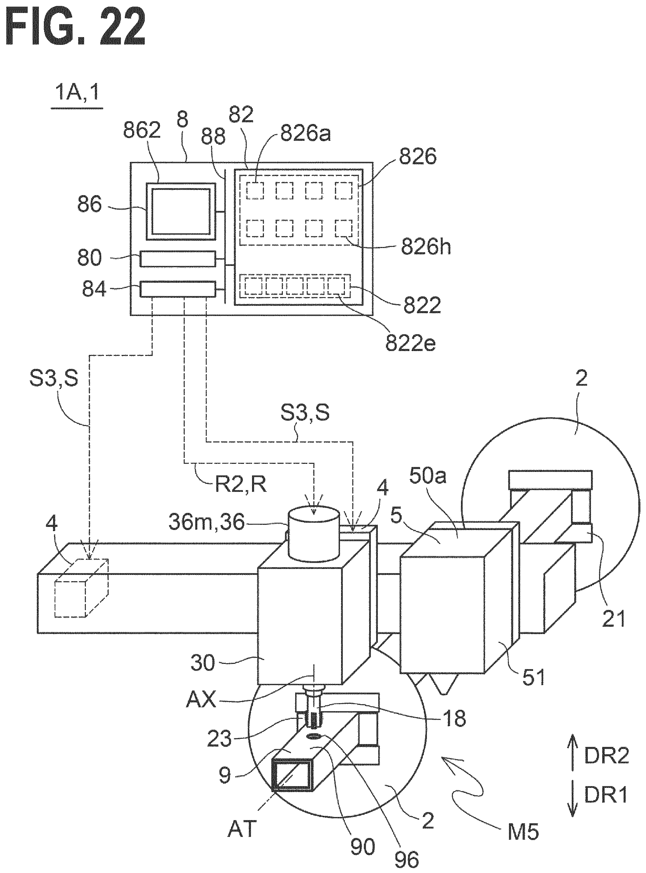

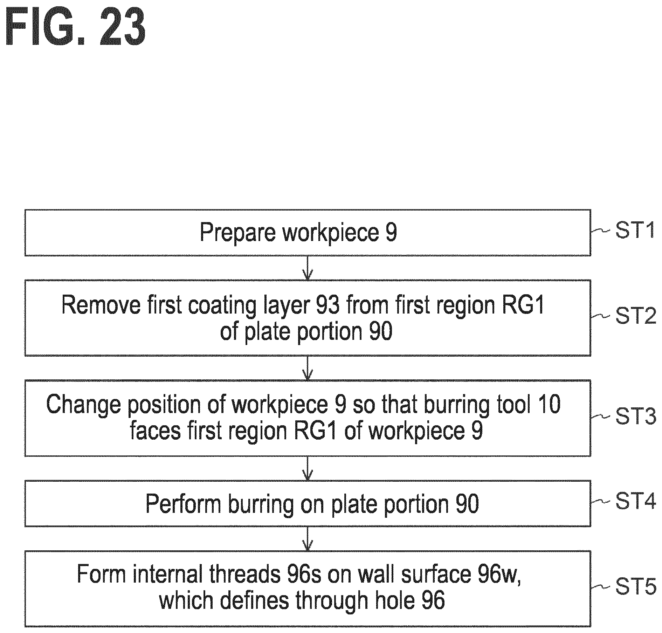

A workpiece processing method and a machine tool 1A in the first embodiment will be described with reference to FIG. 1 to FIG. 23. FIG. 1 is a schematic cross-sectional diagram illustrating one example of a workpiece 9 prepared in a preparation step. FIG. 2 is a schematic cross-sectional diagram illustrating a removal step being carried out to remove a first coating layer 93 from a first region RG1 of a plate portion 90. FIG. 3 is a schematic cross-sectional diagram illustrating one example of the workpiece 9 after the first coating layer 93 has been removed from the first region RG1 of the plate portion 90. FIG. 4 is a schematic cross-sectional diagram illustrating a burring tool 10 moving toward the first region RG1 of the plate portion 90. FIG. 5 is a schematic cross-sectional diagram illustrating the first region RG1 of the plate portion 90 being burred. FIG. 6 is a schematic cross-sectional diagram illustrating a tapping tool 18 moving toward a through hole 96. FIG. 7 is a schematic cross-sectional diagram illustrating internal threads 96s being formed on a wall surface of the through hole 96. FIG. 8 is a schematic cross-sectional diagram illustrating the state after the internal threads 96s have been formed on the wall surface of the through hole 96. FIG. 9 is a schematic cross-sectional diagram illustrating a fractured flange 97 in a comparative example. FIG. 10 is a schematic perspective diagram illustrating one example of the workpiece 9. FIG. 11 is a schematic perspective diagram illustrating one example of the workpiece 9. FIG. 12 is a schematic perspective diagram illustrating one example of the workpiece 9. FIG. 13 is a schematic cross-sectional diagram illustrating a removal step being carried out to remove a first coating layer 93 from a first region RG1 of a plate portion 90. FIG. 14 is a schematic cross-sectional diagram illustrating a removal step being carried out using a chemical liquid L. FIG. 15 is a schematic cross-sectional diagram illustrating a removal step being carried out using a second tool T2. FIG. 16 is a schematic perspective diagram illustrating one example of the burring tool 10. FIG. 17 is a diagram illustrating the machine tool 1A in the first embodiment. FIG. 18 is a schematic cross-sectional diagram illustrating a case where a second wall 99b exists as an obstacle between a laser head 51 and the first region RG1 of the plate portion 90. FIG. 19 and FIG. 20 are diagrams illustrating the machine tool 1A in the first embodiment. FIG. 21 is a diagram illustrating one example of a tool changer 6. FIG. 22 is a diagram illustrating the machine tool 1A in the first embodiment. FIG. 23 is a flowchart showing an example of the workpiece processing method in the embodiment.

As illustrated in FIG. 1, a workpiece 9 is prepared in the first step ST1. The first step ST1 is a preparation step. The workpiece 9 prepared in the preparation step includes a plate portion 90. In the example depicted in FIG. 1, the plate portion 90 is formed by a first wall 99a. The workpiece 9 may include a second wall 99b in addition to the first wall 99a. In the example depicted in FIG. 1, the second wall 99b is positioned opposite the first wall 99a. The workpiece 9 may include a third wall 99c in addition to the first wall 99a and second wall 99b. In the example depicted in FIG. 1, the third wall 99c connects the first wall 99a and the second wall 99b. The workpiece 9 may include a fourth wall 99d (see FIG. 10 as required) positioned opposite the third wall 99c.

In the example depicted in FIG. 1, the plate portion 90 of the workpiece 9 includes a base material 91 and a first coating layer 93 covering at least a portion of the base material 91.

As illustrated in FIG. 2, the first coating layer 93 is removed from a first region RG1 of the plate portion 90 in the second step ST2. The second step ST2 is a removal step. FIG. 3 illustrates the workpiece 9 after the removal step was carried out.

As illustrated in FIG. 4, in the third step ST3, the position of the workpiece 9 relative to the burring tool 10 is changed so that the burring tool 10 comes opposite the first region RG1. The third step ST3 is a position changing step.

As illustrated in FIG. 4, the direction from the base material 91 to the first coating layer 93 is herein defined as a first direction DR1, and the direction opposite to the first direction DR1 is defined as a second direction DR2.

After the position changing step (third step ST3) is carried out, the first direction DR1 coincides with the direction from the burring tool 10 toward the first region RG1 of the workpiece 9.

As illustrated in FIG. 4 and FIG. 5, the plate portion 90 is burred in the fourth step ST4. The fourth step ST4 is a step of burring the plate portion 90 (hereinafter, "burring step"). "Burring" here refers to stretching the edge of a hole into a cylindrical shape. As illustrated in FIG. 5, the burring performed on the plate portion 90 stretches the edge of the hole into a cylindrical shape, forming a flange 97.

In the example depicted in FIG. 4 and FIG. 5, the burring step (fourth step ST4) includes forming a through hole 96 and a flange 97 in the first region RG1 of the plate portion 90 by moving the burring tool 10 in a rotating state in the first direction DR1.

Let us now assume a case in which the burring step is carried out without removing the first coating layer 93 from the first region RG1 of the plate portion 90 as illustrated in FIG. 9. In this case, the flange 97 may not be formed in a favorable manner due to the presence of the first coating layer 93 (e.g., first coating layer 93 containing zinc). For example, the flange 97 may be fractured due to the presence of the first coating layer 93 as illustrated in FIG. 9.

In contrast, according to the first embodiment, the step of removing the first coating layer 93 from the first region RG1 of the plate portion 90 is carried out before the burring step (see FIG. 2). Therefore, defects resulting from the presence of the first coating layer 93 are unlikely to occur in the formation of the flange 97 during the burring step irrespective of the material of the first coating layer 93. For example, generation or conduction of the friction heat of the rotating burring tool 10 in the first region RG1 will not be inhibited by the presence of the first coating layer 93. In other words, the friction heat generated between the burring tool 10 and the plate portion 90 is effectively conducted to the entire first region RG1, ensuring favorable formation of the through hole 96 and flange 97 in the first region RG1 (see FIG. 5).

### (Optional or Additional Configurations)

Next, some optional or additional configurations that may be adopted in the workpiece processing method and the machine tool 1A according to the first embodiment will be described with reference to FIG. 1 to FIG. 23.

### (First Coating Layer 93)

As illustrated in FIG. 4, the first coating layer 93 is located on the opposite side of the first region RG1 of the plate portion 90 from the side that will make contact with the burring tool 10.

The first coating layer 93 is a plated layer 93a that covers at least a portion of the base material 91, for example. More specifically, the first coating layer 93 is a plated layer 93a of pure zinc or zinc alloy (in other words, the first coating layer 93 is a plated layer 93a formed by plating at least a portion of the base material 91 with pure zinc or zinc alloy). The plated layer 93a may be formed by any type of plating techniques. For example, the plated layer 93a may be formed on the base material 91 by electroforming, or may be formed on the base material 91 by electroless plating, or may be formed on the base material 91 by immersion plating, or may be formed on the base material 91 by vacuum plating (e.g., vacuum deposition).

Alternatively, or additionally, the first coating layer 93 may be a colored coating layer, and/or anti-corrosion layer.

The conventional type of burring that uses friction heat on the base material covered with the first coating layer containing zinc could not form a flange in a favorable manner (see FIG. 9). In contrast, according to the first embodiment, the first coating layer 93 in the first region RG1 is removed, so that the through hole 96 and flange 97 can be formed favorably in the first region RG1 irrespective of the material of the first coating layer 93.

In the example depicted in FIG. 10, the first coating layer 93 faces an internal region SP of the workpiece 9 (more specifically, a hollow portion defined by the workpiece 9). More specifically, in the example depicted in FIG. 10, the workpiece 9 is a pipe 9a, and the first coating layer 93 faces the internal space SP1 of the pipe 9a.

Alternatively, as illustrated in FIG. 11, the workpiece 9 may be C-shaped in a cross section perpendicular to the longitudinal direction. In the example depicted in FIG. 11, too, the first coating layer 93 faces an internal region SP of the workpiece 9 (more specifically, a substantially hollow portion defined by the workpiece 9).

In the case where the first coating layer 93 is an inner coating layer covering an inner surface of the base material 91 as illustrated in FIG. 10 and FIG. 11, it is preferable to form an access opening OP in the workpiece 9 to allow means of removing the first coating layer 93 to access the first region RG1. The access opening OP may be formed in advance prior to the execution of the removal step (second step ST2), or may be formed in the workpiece 9 at the same time as the removal step (second step ST2). The access opening OP may be a through opening OP1 as illustrated in FIG. 10, or a slit opening OP2 as illustrated in FIG. 11.

In the example depicted in FIG. 2, the means of removing the first coating layer 93 includes a laser B. As illustrated in FIG. 13, the means of removing the first coating layer 93 may include an assist gas G supplied toward the workpiece 9 in addition to the laser B. The assist gas G serves to remove the material melted by the laser B from the area irradiated with the laser B. The assist gas G may be air, or oxygen, or any inactive gas such as nitrogen or argon.

Alternatively, or additionally, as illustrated in FIG. 14, the means of removing the first coating layer 93 may include a chemical liquid L (e.g., an organic solution) for removing the first coating layer 93. In the example depicted in FIG. 14, the chemical liquid L is applied on the first coating layer 93, so that the first coating layer 93 is removed from the first region RG1 of the plate portion 90.

Alternatively, or additionally, as illustrated in FIG. 15, the means of removing the first coating layer 93 may include a tool (e.g., a cutting tool, file, etc.) for removing the first coating layer 93. Hereinafter, the tool for removing the first coating layer 93 will be referred to as a second tool T2. In the example depicted in FIG. 15, the first coating layer 93 is removed from the first region RG1 of the plate portion 90 by the second tool T2 making contact with the first coating layer 93.

In the example depicted in FIG. 10 and FIG. 11, the workpiece 9 includes the first wall 99a and the second wall 99b positioned opposite the first wall 99a. The first region RG1 (the area encircled by the broken line in FIG. 10 and FIG. 11) to be burred is located in the first wall 99a. The access opening OP is formed in the second wall 99b. In the example depicted in FIG. 10 and FIG. 11, the access opening OP is positioned opposite the first region RG1 (more specifically, a stripping target region RT to be described later). Thus, the means of removing the first coating layer 93 (e.g., a laser B that removes the first coating layer 93, a chemical liquid L that removes the first coating layer 93, a tool T1 that applies the chemical liquid L for removing the first coating layer 93, or a second tool T2 that removes the first coating layer 93) can have easy access to the first coating layer 93 through the access opening OP.

In the example depicted in FIG. 3, the removal of the first coating layer 93 from the first region RG1 of the plate portion 90 forms an exposed surface 91s in the first region RG1, where the base material 91 is substantially exposed.

A portion of the area covered by the first coating layer 93, to be removed in the removal step described above (or by a remover 5 to be described later), is herein defined as a stripping target region RT (see FIG. 1 and FIG. 2). The first direction DR1 mentioned above coincides with the direction from the boundary of the stripping target region RT on the base material 91 toward the stripping target region RT.

The region formed by the removal of the first coating layer 93 is herein defined as a stripped region RB (see FIG. 3). In other words, the stripping target region RT becomes a stripped region RB by carrying out the removal step (second step ST2). The first direction DR1 mentioned above coincides with the direction from the exposed surface 91s toward the stripped region RB.

The size of the access opening OP may be set according to the size of the stripping target region RT, or the size of the through hole 96 to be formed in the first region RG1 in the burring step. For example, the size of the access opening OP may be increased in accordance with the size of the stripping target region RT, or the size of the through hole 96.

In the example depicted in FIG. 3, the access opening OP (more specifically, the opening area of the access opening OP) is smaller in size than the stripped region RB (more specifically, the area of the stripped region RB). A smaller size of the access opening OP means less loss of strength in the workpiece 9 due to the presence of the access opening OP. Alternatively, the access opening OP may have a size equal to or larger than the size of the stripped region RB.

In the example depicted in FIG. 6, the access opening OP has a larger inside diameter than the inside diameter of the through hole 96. Alternatively, the access opening OP may have an inside diameter equal to or smaller than the inside diameter of the through hole 96. In the example depicted in FIG. 6, the through hole 96 is positioned opposite the access opening OP.

### (Second Coating Layer 94)

As illustrated in FIG. 1, the plate portion 90 of the workpiece 9 includes a second coating layer 94 positioned on the side in the second direction DR2 of the base material 91 and covering at least a portion of the base material 91. In the example depicted in FIG. 1, the workpiece 9 prepared in the preparation step (first step ST1) includes the base material 91, first coating layer 93, and second coating layer 94. The base material 91 is sandwiched between the first coating layer 93 and the second coating layer 94.

The material of the second coating layer 94 may be the same as, or different from, the material of the first coating layer 93.

The second coating layer 94 is a plated layer 94a that covers at least a portion of the base material 91, for example. The plated layer 94a may be formed by any type of plating techniques. For example, the plated layer 94a may be formed on the base material 91 by electroforming, or may be formed on the base material 91 by electroless plating, or may be formed on the base material 91 by immersion plating, or may be formed on the base material 91 by vacuum plating (e.g., vacuum deposition).

Alternatively, or additionally, the second coating layer 94 may be a colored coating layer, and/or anti-corrosion layer. The second coating layer 94 may be a coating layer that contains zinc. For example, the second for example 94 may be a layer formed by the plating of pure zinc or zinc alloy.

In the example depicted in FIG. 10 and FIG. 11, the second coating layer 94 is an outer coating layer that covers an outer surface of the base material 91.

In the example depicted in FIG. 2 and FIG. 3, the second coating layer 94 is not the target of removal in the removal step (second step ST2). In other words, the second coating layer 94 is not removed in the removal step (second step ST2) and remains there. Alternatively, the first coating layer 93 and second coating layer 94 may both be removed from the first region RG1 of the plate portion 90 during the removal step (second step ST2). The removal of the first coating layer 93 and second coating layer 94 from the first region RG1 of the plate portion 90 may be achieved by laser irradiation, or with a chemical liquid, or through use of a tool such as a cutting tool (in other words, the second tool T2).

### (Base material 91)

The base material 91 is made of metal such as iron or stainless steel, for example. The base material 91 has a thickness that is large enough to allow a flange 97 to be formed. In the example depicted in FIG. 1, the base material 91 is larger in thickness than the first coating layer 93 and the second coating layer 94.

### (Workpiece 9)

The workpiece 9 may be a pipe as illustrated in FIG. 10, or an angle beam as illustrated in FIG. 12. The workpiece 9 may be a channel beam, or a flat plate. The workpiece 9 may be long along a direction perpendicular to the first direction DR1.

The workpiece 9 may be a component that defines a flow passage for a fluid to flow through. It can also be a component of an air-conditioner, a domestic appliance, an automobile, or a control board. Alternatively, it may be an architectural part, a shelf part, a furniture part, or a component of agricultural machinery, a kitchen appliance, or material handling equipment.

The plate portion 90 has a thickness TH (see FIG. 1) of 0.5 mm or more and 6 mm or less, for example, in the first region RG1.

### (Removal Step)

In the example depicted in FIG. 2, the step of removing the first coating layer 93 (removal step: second step ST2) includes removing the first coating layer 93 from the first region RG1 of the plate portion 90 by irradiating the first coating layer 93 with a laser B. In the example depicted in FIG. 2, the traveling direction of the laser B toward the first coating layer 93 in the removal step is the second direction DR2 (in other words, the direction opposite to the direction from the base material 91 toward the first coating layer 93).

As illustrated in FIG. 2, the access opening OP (more specifically, the through hole for access) may be formed in the second wall 99b of the workpiece 9 by the laser B emitted from the laser head 51. In the example depicted in FIG. 2, the laser B emitted from the laser head 51 passes through the access opening OP formed in the second wall 99b of the workpiece 9. The laser B passing through the access opening OP irradiates the first wall 99a of the workpiece 9, thereby removing the first coating layer 93 from a portion of the first wall 99a.

Alternatively, or additionally, as illustrated in FIG. 14, the removal step of removing the first coating layer 93 (second step ST2) may include removing the first coating layer 93 from the first region RG1 of the plate portion 90 by applying a chemical liquid L to the first coating layer 93.

In the example depicted in FIG. 14, the chemical liquid L is supplied across the inside of the access opening OP formed in the second wall 99b of the workpiece 9. The chemical liquid L supplied across the inside of the access opening OP is applied to the first wall 99a of the workpiece 9, thereby removing the first coating layer 93 from a portion of the first wall 99a.

Alternatively, or additionally, as illustrated in FIG. 15, the removal step of removing the first coating layer 93 (second step ST2) may include removing the first coating layer 93 from the first region RG1 of the plate portion 90 by bringing a second tool T2 such as a cutting tool into contact with the first coating layer 93.

In the example depicted in FIG. 15, the second tool T2 such as a cutting tool is inserted into the access opening OP formed in the second wall 99b of the workpiece 9. The second tool T2 inserted into the access opening OP removes the first coating layer 93 from a portion of the first wall 99a of the workpiece 9.

### (Position Changing Step)

In the example depicted in FIG. 3 and FIG. 4, after the first coating layer 93 has been removed from the first region RG1 of the plate portion 90, before burring the plate portion 90 (burring step: fourth step ST4), the position of the workpiece 9 relative to the burring tool 10 is changed so that the burring tool 10 comes opposite the first region RG1 of the workpiece 9 (hereinafter referred to as "position changing step"). As illustrated in FIG. 3 and FIG. 4, the position changing step may include inverting the workpiece 9. More specifically, the position changing step may include rotating the workpiece 9 180° about the axis AT parallel to the longitudinal direction of the workpiece 9.

### (Burring Step)

The step of burring the plate portion 90 (burring step: fourth step ST4) includes conducting the friction heat generated between the rotating burring tool 10 and the plate portion 90 to the first region RG1 of the plate portion 90, and pressing the first region RG1 of the plate portion 90 in the first direction DR1 with the rotating burring tool 10.

The friction heat generated between the rotating burring tool 10 and the plate portion 90 being conducted to the first region RG1 of the plate portion 90 softens (more specifically, plasticizes) the first region RG1. In the first embodiment, before burring the plate portion 90 (burring step: fourth step ST4), the first coating layer 93 that was covering the surface on the side in the first direction DR1 of the base material 91 is removed from the first region RG1 (see FIG. 2 and FIG. 3). This allows for favorable conduction of friction heat to the entire first region RG1 during the burring and ensures that friction heat conduction is not inhibited by the presence of the first coating layer 93.

As illustrated in FIG. 5, in the step of burring the plate portion 90 (burring step: fourth step ST4), the first region RG1 softened by the friction heat is pressed by the burring tool 10 in the first direction DR1. The burring tool 10 pressing the first region RG1 that was softened by friction heat in the first direction DR1 forms a through hole 96 in the first region RG1, as well as stretches the edge of the through hole 96 in the first direction DR1 in a cylindrical shape. Thus a flange 97 is formed in the first region RG1. In the example depicted in FIG. 5, the through hole 96 and flange 97 are formed at the same time in the step of burring the plate portion 90.

Formation of a through hole 96 in the first region RG1 herein includes formation of a through hole 96 for the burring tool 10 to penetrate across, in the first region RG1 that is not provided with a pilot hole (see FIG. 4 and FIG. 5). Moreover, formation of a through hole 96 in the first region RG1 herein includes formation of a through hole 96, in the first region RG1, for the burring tool 10 to penetrate across, by extending a pilot hole that was provided in the first region RG1 in advance. In other words, the first region RG1 may be provided with a pilot hole, or may not be provided with a pilot hole, before carrying out the step of burring the plate portion 90 (burring step: fourth step ST4).

As illustrated in FIG. 4 and FIG. 5, the step of burring the plate portion 90 (burring step: fourth step ST4) may include moving the rotating burring tool 10 in the first direction DR1 so that the rotating burring tool 10 penetrates across the second coating layer 94 and the base material 91 in this order. In the example depicted in FIG. 4 and FIG. 5, the second coating layer 94 is not removed from the first region RG1 before the execution of the burring step, so that the second coating layer 94 remains there. Skipping the step of removing the second coating layer 94 from the first region RG1 reduces the total time required for the processing of the workpiece.

### (Burring Tool 10)

In the example depicted in FIG. 4, the burring tool 10 includes a distal end portion 11 in a tapered shape and a columnar portion 13 continuous with the distal end portion 11. The burring tool 10 may include a distal end portion 11 in a tapered shape, a columnar portion 13 continuous with the distal end portion 11, and a shoulder portion 15 continuous with the columnar portion 13. In other words, the burring tool 10 may include a distal end portion 11 in a tapered shape and a shoulder portion 15, as well as a columnar portion 13 positioned between the distal end portion 11 and the shoulder portion 15.

The distal end portion 11 and columnar portion 13 serve to form a through hole 96 and a flange 97 in the first region RG1 of the plate portion 90. More specifically, the distal end portion 11 in a rotating state presses the first region RG1 of the plate portion 90 in the first direction DR1, thereby extending a hole formed in the first region RG1. As a result, a through hole 96 is formed in the first region RG1. The columnar portion 13 in a rotating state being inserted into the through hole 96 in the first region RG1 refines the shapes of the through hole 96 and the flange 97. When a section perpendicular to the center axis of the burring tool 10 is defined as a cross section of the columnar portion 13, this cross section may be substantially constant in size and shape along the center axis of the burring tool 10.

The distal end portion 11 of the burring tool 10 may have a circular cross-sectional shape, or a rounded polygonal shape (e.g., rounded rectangular shape) as illustrated in FIG. 16, or other shapes. The columnar portion 13 of the burring tool 10 may have a circular cross-sectional shape, or a rounded polygonal shape (e.g., rounded rectangular shape) as illustrated in FIG. 16, or other shapes.

As illustrated in FIG. 5, the shoulder portion 15 serves to refine the shape of the surface on the side in the second direction DR2 of the plate portion 90 of the workpiece 9. More specifically, the shoulder portion 15 in a rotating state presses the surface on the side in the second direction DR2 of the plate portion 90, thereby refining the shape of this surface.

### (Tool Changing Step)

The workpiece processing method in the first embodiment may include a step of changing the burring tool 10 held on the machining head 30 to a tapping tool 18 (see FIG. 6), which is hereinafter referred to as "tool changing step." The tool changing step is carried out using a tool changer, for example. Alternatively, the tool changing step may be carried out manually. In the case where the machine tool in the first embodiment includes a second machining head that holds the tapping tool 18 in addition to the machining head 30 that holds the burring tool 10, the tool changing step may be omitted.

### (Tapping Step)

As illustrated in FIG. 6 and FIG. 7, the workpiece processing method in the first embodiment may include a step of forming internal threads on a wall surface 96w, which defines the through hole 96 (hereinafter referred to as "tapping step"). The tapping step is carried out as the fifth step ST5 after the execution of the fourth step ST4 (burring step).

In the example depicted in FIG. 6 and FIG. 7, the tapping step (fifth step ST5) includes forming internal threads 96s on the wall surface 96w, which defines the through hole 96, by moving the rotating tapping tool 18 in the first direction DR1. FIG. 8 illustrates a state after the tapping step was carried out.

In the first embodiment where the first coating layer 93 has been removed from the first region RG1 of the plate portion 90, the flange 97 is formed favorably in the burring step. The favorably formed flange 97 allows easy formation of internal threads 96s on an inner circumferential surface of the flange 97 during the tapping step.

### (Machine Tool 1A)

As illustrated in FIG. 17, the machine tool 1A according to the first embodiment includes: a work holder 2, a machining head 30, a rotational driver 36 (e.g., motor 36m), a mover 4, a remover 5, and a controller 8.

The work holder 2 supports the workpiece 9. The work holder 2 may include a first chuck 21 that supports a first portion of the workpiece 9 and a second chuck 23 that supports a second portion of the workpiece 9.

The machining head 30 supports the burring tool 10 in a manner rotatable about the rotation axis AX. In the example depicted in FIG. 4, the machining head 30 includes a rotating body 31, and a frame 33 that rotatably supports the rotating body 31. In the example depicted in FIG. 4, the rotating body 31 supports the burring tool 10 via a first tool holder HD1.

The rotational driver 36 rotates the burring tool 10 about a rotation axis AX that coincides with the center axis of the burring tool 10. More specifically, the rotational driver 36 rotates the burring tool 10 about the rotation axis AX by rotating the rotating body 31 about a first axis AX1. In the example depicted in FIG. 4, the first axis AX1 that is the rotation axis of the rotating body 31 is coaxial with the rotation axis AX of the burring tool 10.

In the example depicted in FIG. 17, the mover 4 moves the machining head 30 relative to the work holder 2. The mover 4 also moves the laser head 51 relative to the work holder 2.

The remover 5 removes a portion of the first coating layer 93 from the workpiece 9. In the example depicted in FIG. 17, the remover 5 includes a laser irradiator 50a that has the laser head 51. Alternatively, or additionally, the remover 5 may include a chemical liquid applicator 50b (see FIG. 14), and/or a cutting tool 50c (see FIG. 15). In the case where a second tool T2 such as a cutting tool is attached to the machining head 30 as illustrated in FIG. 15, the machining head 30 and the second tool T2 serve as the remover 5.

The controller 8 controls the rotational driver 36, mover 4, and remover 5. Additionally, the controller 8 may control the work holder 2.

The controller 8 can implement a removal mode M1. The removal mode M1 is a mode in which the controller 8 sends a control command at least to the remover 5, to remove the first coating layer 93 from the first region RG1 of the plate portion 90, at least using the remover 5. More specifically, the removal mode M1 includes sending an emission command E1 from the controller 8 to the laser irradiator 50a as illustrated in FIG. 17 so that the first coating layer 93 is removed from the first region RG1 of the plate portion 90 by the laser B emitted from the laser head 51.

For example, as illustrated in FIG. 17, the controller 8 that implements the removal mode M1 sends a first motion command S1 to the mover 4 for moving the laser head 51 relative to the work holder 2. The mover 4 that receives the first motion command S1 moves the laser head 51 relative to the work holder 2 so that the first region RG1 of the plate portion 90 is positioned on a laser emission axis of the laser head 51. The controller 8 that implements the removal mode M1 also sends an emission command E1 to the laser irradiator 50a. The laser irradiator 50a that receives the emission command E1 emits a laser from the laser head 51 in a direction toward the first region RG1 of the plate portion 90. The mover 4 that receives the first motion command S1 moves the laser head 51 relative to the work holder 2 (see the broken line arrow in FIG. 2) so that the laser emitted from the laser head 51 scans the stripping target region RT. The laser B emitted from the laser head 91 thus removes the first coating layer 93 from the first region RG1 of the plate portion 90. When the laser B emitted to the first region RG1 has a spot diameter that equals to the size of the stripping target region RT, the laser B need not scan the region.

In the case where the second wall 99b of the workpiece 9 exists between a laser output aperture 52 of the laser head 51 and the first region RG1 of the plate portion 90 as illustrated in FIG. 18, the laser B emitted from the laser head 51 forms an access opening OP (see FIG. 2) in the second wall 99b of the workpiece 9 when the removal mode M1 is implemented by the controller 8, and at the same time the laser B emitted from the laser head 51 removes the first coating layer 93 from the first region RG1 of the plate portion 90.

The controller 8 can implement an inversion mode M2 to invert the workpiece 9. The inversion mode M2 is a mode in which the controller 8 sends a control command to the work holder 2, to invert the workpiece 9 using the work holder 2.

For example, as illustrated in FIG. 19, the controller 8 that implements the inversion mode M2 sends an inversion command RW for inverting the workpiece 9 to the work holder 2. The work holder 2 that receives the inversion command RW inverts the workpiece 9. More specifically, the work holder 2 that receives the inversion command RW rotates the workpiece 9 180° about an axis AT parallel to the longitudinal direction of the workpiece 9. In the example depicted in FIG. 19, the workpiece 9 is inverted by the work holder 2 that receives the inversion command RW, by rotating the first chuck 21 and second chuck 23 that support the workpiece 9 180° about the axis AT parallel to the longitudinal direction of the workpiece 9. FIG. 19 shows a state after the workpiece has been inverted.

The controller 8 can implement a burring mode M3. The burring mode M3 is a mode in which the controller 8 sends a control command at least to the rotational driver 36 and the mover 4, to bur the plate portion 90. The burring mode M3 is also a mode in which a through hole 96 and a flange 97 are formed in the first region RG1, from which the first coating layer 93 has been removed, using the burring tool 10 moving in the first direction DR1 in a rotating state.

For example, as illustrated in FIG. 20, the controller 8 that implements the burring mode M3 sends a second motion command S2 to the mover 4 for moving the burring tool 10 relative to the work holder 2. The mover 4 that receives the second motion command S2 moves the burring tool 10 relative to the work holder 2 so that the first region RG1 of the plate portion 90 is positioned on the rotation axis AX of the burring tool 10. The controller 8 that implements the burring mode M3 also sends a first rotation command R1 to the rotational driver 36. The rotational driver 36 that receives the first rotation command R1 rotates the burring tool 10 about the rotation axis AX. Further, the mover 4 that receives the second motion command S2 moves the rotating burring tool 10 in the first direction DR1 (see arrow AR1 in FIG. 4 or FIG. 20) so that the rotating burring tool 10 penetrates across the first region RG1 of the plate portion 90. Thus a through hole 96 and a flange 97 are formed in the first region RG1 of the plate portion 90. In the example depicted in FIG. 5, the through hole 96 and flange 97 are formed simultaneously in the first region RG1 of the plate portion 90 as the burring mode M3 is implemented.

The controller 8 can also implement a tool change mode M4. The tool change mode M4 is a mode in which the controller 8 sends a control command at least to the mover 4 and the tool changer 6 (see FIG. 21), to change the burring tool 10 attached to the machining head 30 to the tapping tool 18, at least using the mover 4 and the tool changer 6.

For example, as illustrated in FIG. 21, the controller 8 that implements the tool change mode M4 sends a motion command S4 to the mover 4. The mover 4 that receives the motion command S4 moves the machining head 30 to a tool change position P1 (see FIG. 21). The controller 8 that implements the tool change mode M4 also sends a tool change command C1 to the tool changer 6. The tool changer 6 that receives the tool change command C1 changes the burring tool 10 held on the machining head 30 to the tapping tool 18.

The controller 8 can also implement a tapping mode M5. The tapping mode M5 is a mode in which the controller 8 sends a control command at least to the rotational driver 36 and the mover 4, to form internal threads 96s on a wall surface 96w, which defines the through hole 96, using at least the rotational driver 36 and the mover 4.

For example, as illustrated in FIG. 22, the controller 8 that implements the tapping mode M5 sends a third motion command S3 to the mover 4 for moving the tapping tool 18 relative to the work holder 2. The mover 4 that receives the third motion command S3 moves the tapping tool 18 relative to the work holder 2 so that the center axis of the through hole 96 is positioned on the rotation axis AX of the tapping tool 18. The controller 8 that implements the tapping mode M5 also sends a second rotation command R2 to the rotational driver 36. The rotational driver 36 that receives the second rotation command R2 rotates the tapping tool 18 about the rotation axis AX. Further, the mover 4 that receives the third motion command S3 moves the rotating tapping tool 18 in the first direction DR1 so that internal threads 96s are formed on the wall surface 96w, which defines the through hole 96. The internal threads 96s are thus formed on the wall surface 96w, which defines the through hole 96.

### (Second Embodiment)

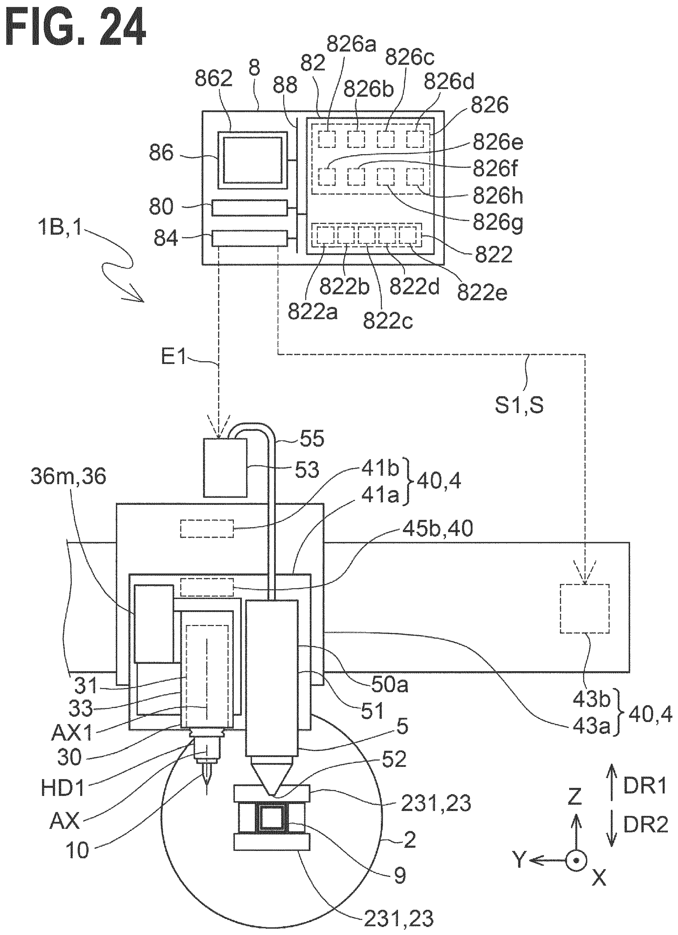

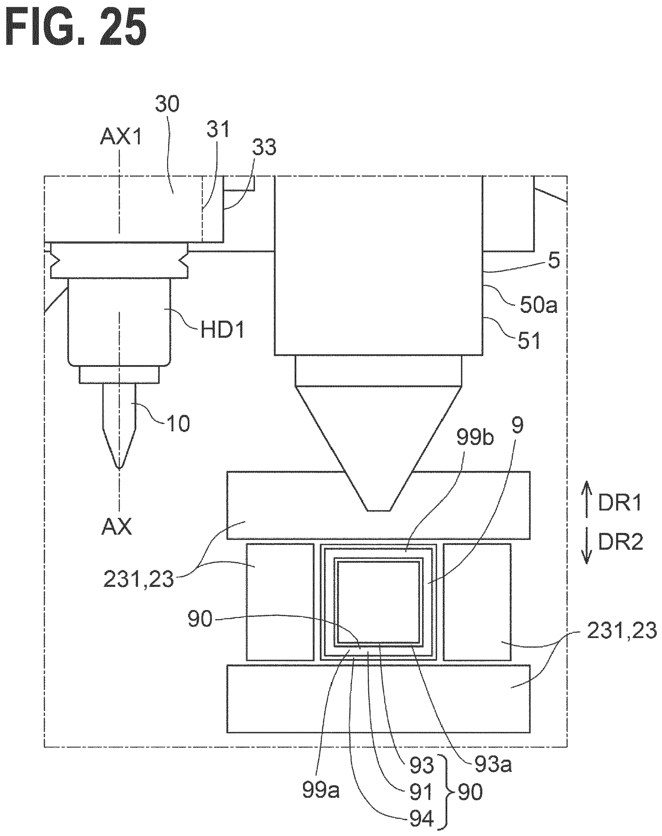

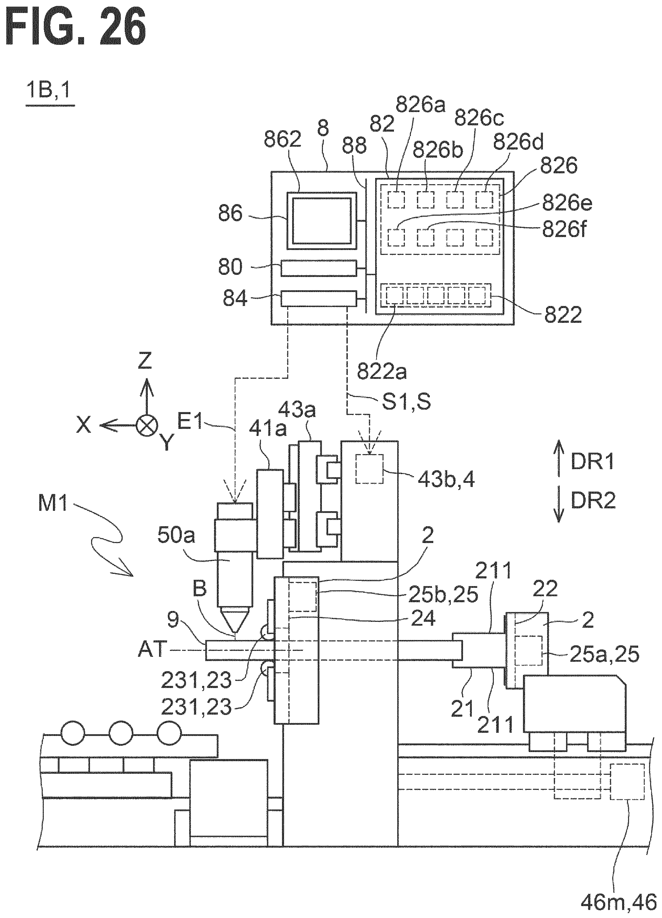

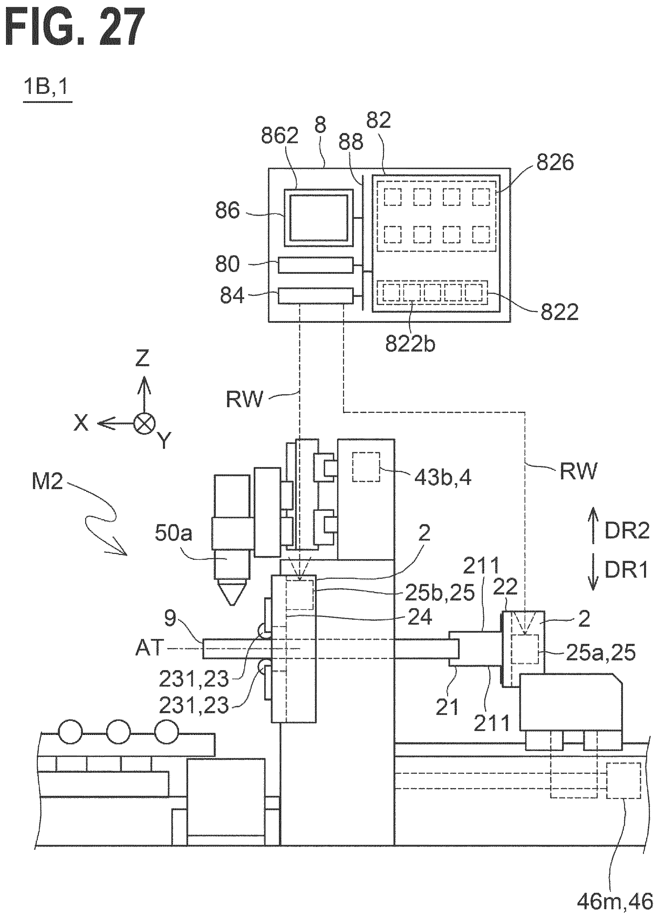

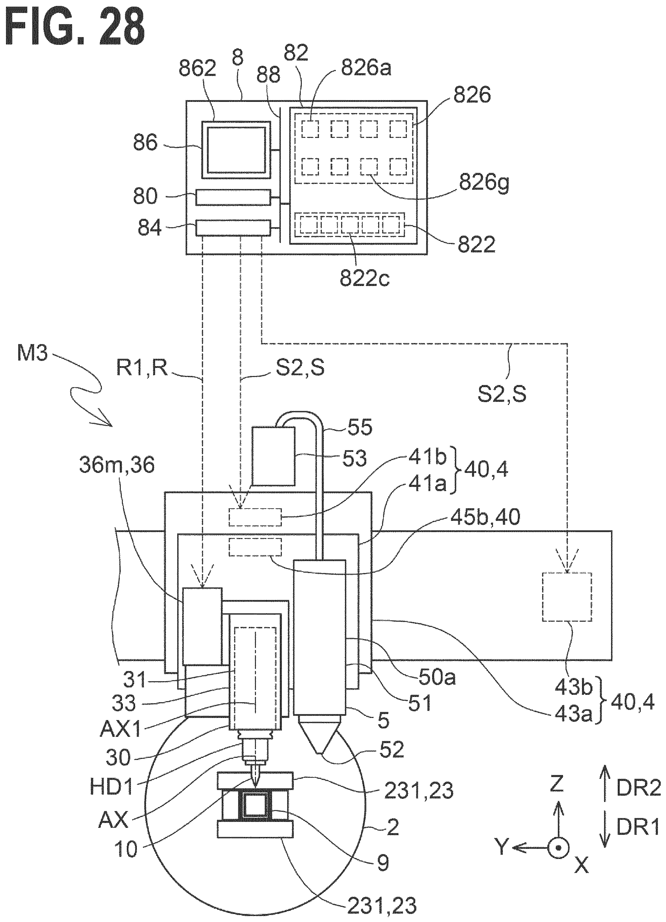

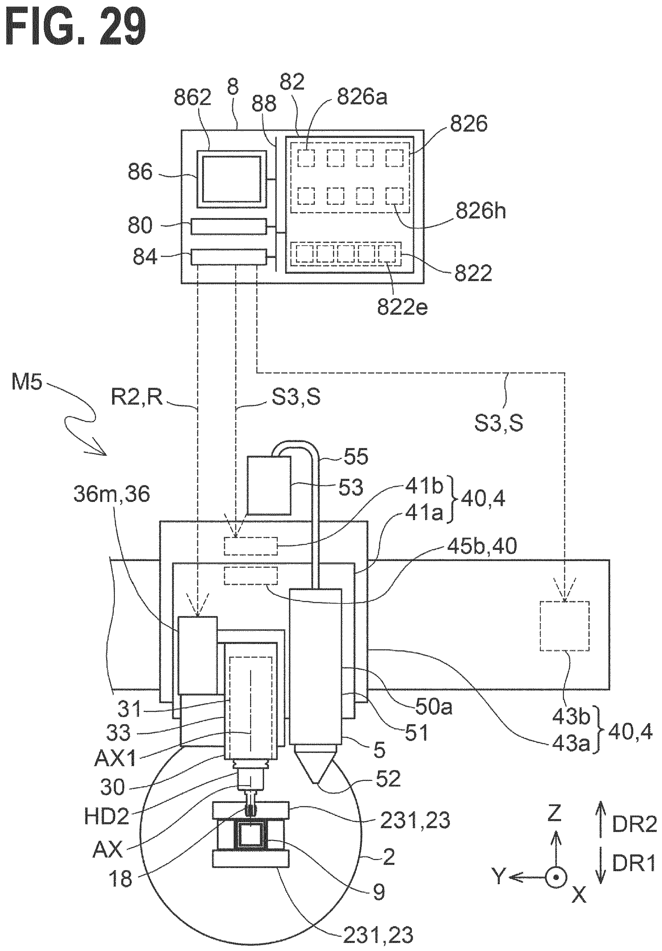

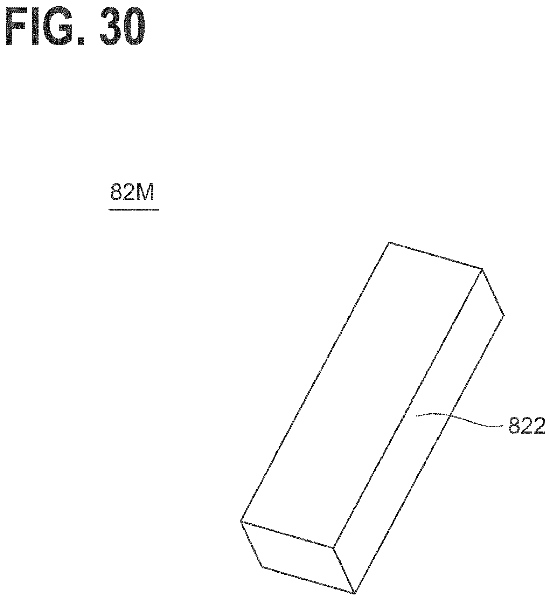

A workpiece processing method, a machine tool 1B, and a program 822 in the second embodiment will be described with reference to FIG. 1 to FIG. 30. FIG. 24 is a diagram illustrating a part of the machine tool 1B in the second embodiment. FIG. 25 is an enlargement of one part of FIG. 24. FIG. 26 and FIG. 27 are diagrams illustrating the machine tool 1B in the second embodiment. FIG. 28 and FIG. 29 are diagrams illustrating a part of the machine tool 1B in the second embodiment. FIG. 30 is a diagram illustrating one example of a storage medium 82M on which the program 822 is recorded.

The description of the second embodiment will focus on the features different from the first embodiment. Repetitive descriptions of the matters that have already been described in the first embodiment will be omitted in the second embodiment. It goes without saying that these already described matters of the first embodiment are applicable to the second embodiment even though there is no explicit explanation thereof in the second embodiment. Conversely, all the matters described in the second embodiment are applicable to the first embodiment.

As illustrated in FIG. 24, the machine tool 1B according to the second embodiment includes: a work holder 2, a machining head 30, a rotational driver 36, a mover 4, a remover 5 (e.g., laser irradiator 50a), and a controller 8.

The work holder 2, machining head 30, rotational driver 36, mover 4, remover 5 (e.g., laser irradiator 50a), and controller 8 have already been described in the first embodiment, and therefore repetitive descriptions of these elements will be omitted.

The second embodiment provides the same effects as the first embodiment.

The workpiece processing method in the second embodiment includes a preparation step (first step ST1), a removal step (second step ST2), and a burring step (fourth step ST4). Additionally, the workpiece processing method in the second embodiment may include a position changing step (third step ST3) and/or a tapping step (fifth step ST5).

The preparation step, removal step, position changing step, burring step, and tapping step have already been described in the first embodiment, and therefore repetitive descriptions of these steps will be omitted.

### (Optional or Additional Configurations)

Next, some optional or additional configurations that may be adopted in the second embodiment (or in the above-described first embodiment) will be described with reference to FIG. 1 to FIG. 30.

### (Workpiece 9)

As illustrated in FIG. 25, the workpiece 9 includes a plate portion 90, which includes a base material 91 and a first coating layer 93 covering at least a portion of the base material 91. The workpiece 9 has already been described in the first embodiment, and therefore repetitive descriptions of the workpiece 9 will be omitted.

### (Work Holder 2)

In the example depicted in FIG. 26, the work holder 2 includes a first chuck 21 that supports a first portion of the workpiece 9 and a second chuck 23 that supports a second portion of the workpiece 9.

The first chuck 21 may include a gripper member 211 that can grip the workpiece 9. The first chuck 21 may be configured to be movable with the workpiece 9 in a direction parallel to the X axis. In the example depicted in FIG. 26, the X axis is an axis parallel to the direction in which the workpiece 9 gripped by the first chuck 21 extends.

The second chuck 23 may include a plurality of guide rollers 231 for holding the workpiece 9. The plurality of guide rollers 231 guide the movement of the workpiece 9 (more specifically, an elongated workpiece) in a direction parallel to the X axis.

In the example depicted in FIG. 26, the work holder 2 includes a second rotational driver 25 for rotating the workpiece 9 about the axis AT parallel to the longitudinal direction of the workpiece. The second rotational driver 25 may include a first motor 25a for rotating a second rotating body 22 that supports the first chuck 21 about the above-mentioned axis AT, and a second motor 25b for rotating a third rotating body 24 that supports the second chuck 23 about the above-mentioned axis AT.

### (Mover 4)

In the example depicted in FIG. 24, the mover 4 moves the machining head 30 relative to the work holder 2. The mover 4 also moves the laser head 51 relative to the work holder 2.

In the example depicted in FIG. 24, the mover 4 includes a first mover 40 that moves the machining head 30. As illustrated in FIG. 26, the mover 4 may include a second mover 46 (more specifically, a motor 46m such as a servo motor) that moves the workpiece 9. In the example depicted in FIG. 26, the second mover 46 moves the first chuck 21 in a direction parallel to the X axis, to move the workpiece 9 gripped by the first chuck 21 in the direction parallel to the X axis.

In the example depicted in FIG. 24, the first mover 40 includes movable members (41a and 43a) that support the machining head 30, and drivers (41b and 43b) that move the movable members (41a and 43a).

The first mover 40 may include a first movable member 41a and a first driver 41b that moves the first movable member 41a in a direction parallel to the Z axis. In the example depicted in FIG. 24, the first movable member 41a supports the machining head 30 directly or indirectly, and is movable with the machining head 30 in the direction parallel to the Z axis. The first movable member 41a may support the laser head 51 directly or indirectly. The first movable member 41a may be movable with the laser head 51 in the direction parallel to the Z axis. The Z axis is perpendicular to the X axis. In the example depicted in FIG. 24, the Z axis is parallel to the vertical direction.

The first mover 40 may include a second movable member 43a and a second driver 43b that moves the second movable member 43a in a direction parallel to the Y axis. In the example depicted in FIG. 24, the second movable member 43a supports the machining head 30 directly or indirectly, and is movable with the machining head 30 in the direction parallel to the Y axis. The second movable member 43a may support the laser head 51 directly or indirectly. The second movable member 43a may be movable with the laser head 51 in the direction parallel to the Y axis. The Y axis is perpendicular to both the X and Z axes. In the example depicted in FIG. 24, the Y axis is parallel to the horizontal plane.

The first mover 40 may include a third driver 45b that moves the machining head 30 relative to the laser head 51. In the example depicted in FIG. 24, the third driver 45b moves the machining head 30 in a direction parallel to the Z axis relative to the laser head 51.

### (Laser Irradiator 50a)

As illustrated in FIG. 24, the laser irradiator 50a includes the laser head 51, a laser light source 53, and an optical component 55 (e.g., optical fiber) that transmits a laser from the laser light source 53 to the laser head 51. The laser head 51 includes a laser output aperture 52 from which the laser is emitted.

### (Machining Head 30)

The machining head 30 supports the burring tool 10 in a manner rotatable about the rotation axis AX. The machining head 30 includes a rotating body 31 and a frame 33 that rotatably supports the rotating body 31. In the example depicted in FIG. 24, the rotating body 31 supports the burring tool 10 via a first tool holder HD1.

The rotational driver 36 rotates the burring tool 10 about the rotation axis AX by rotating the rotating body 31 about a first axis AX1. In the example depicted in FIG. 24, the first axis AX1 that is the rotation axis of the rotating body 31 is coaxial with the rotation axis AX of the burring tool 10.

In the example depicted in FIG. 28 and FIG. 29, the machining head 30 can hold the first tool holder HD1 (see FIG. 28) that supports the burring tool 10, and a second tool holder HD2 (see FIG. 29) that supports the tapping tool 18 in a selectable manner.

### (Tool Changer 6)

The machine tool 1 may include a tool changer 6. As illustrated in FIG. 21, the tool changer 6 allows the first tool holder HD1 held on the machining head 30 (more specifically, the rotating body 31 of the machining head 30) to be changed to the second tool holder HD2 that holds the tapping tool 18. The tool changer 6 also allows the second tool holder HD2 held on the machining head 30 (more specifically, the rotating body 31 of the machining head 30) to be changed to the first tool holder HD1 that holds the burring tool 10.

The tool changer 6 may include a tool changing arm 61, an arm rotator 63 that rotates the tool changing arm 61, and an arm mover 65 that moves the tool changing arm 61 linearly. The arm rotator 63 rotates the tool changing arm 61 about a second axis AX2. The arm mover 65 moves the tool changing arm 61 in a direction parallel to the second axis AX2.

### (Controller 8)

The controller 8 controls the rotational driver 36, the mover 4 (e.g., first driver 41b, second driver 43b, third driver 45b, and motor 46m for moving the workpiece 9, etc.), and the remover 5 (e.g., laser irradiator 50a). Additionally, the controller 8 may control the second rotational driver 25 and/or the tool changer 6.

For example, in the example depicted in FIG. 24, the controller 8 sends an emission command E1 to the laser irradiator 50a, so that the laser head 51 emits the laser B. More specifically, the controller 8 sends an emission command E1 to the laser irradiator 50a, and the laser irradiator 50a that receives the emission command E1 causes a laser B to be emitted from the laser head 51 (more specifically, from the laser output aperture 52 of the laser head 51).

For example, in the example depicted in FIG. 28 or FIG. 29, the controller 8 sends a rotation command R to the rotational driver 36 (e.g., motor 36m), to rotate the burring tool 10 or tapping tool 18. More specifically, the controller 8 sends a rotation command R to the rotational driver 36, and the rotational driver 36 that receives the rotation command R rotates the burring tool 10 or tapping tool 18 about the rotation axis AX.

For example, in the example depicted in FIG. 24 or FIG. 28, the controller 8 sends a motion command S to the mover 4, to move the machining head 30 or the laser head 51 relative to the work holder 2. More specifically, the controller 8 sends a motion command S to the mover 4, and the mover 4 that receives the motion command S moves the machining head 30 or the laser head 51 relative to the work holder 2.

As illustrated in FIG. 24, the controller 8 includes a hardware processor 80 (hereinafter, simply "processor 80"), a memory 82, a communication circuit 84, and an inputter 86 (e.g., a display 862 with a touchscreen). The processor 80, memory 82, communication circuit 84, and inputter 86 are all interconnected via a bus 88.

The memory 82 stores data 826 and a program 822. The program 822 stored in the memory 82 may include a first program 822a for implementing the above-described removal mode M1, and may include a third program 822c for implementing the above-described burring mode M3. The program 822 may include a second program 822b for implementing the above-described inversion mode M2, and may include a fourth program 822d for implementing the above-described tool change mode M4. The program 822 may include a fifth program 822e for implementing the above-described tapping mode M5.

The memory 82 is a storage medium readable by the processor 80 of the controller 8. The memory 82 may for example be a non-volatile or volatile semiconductor memory such as a RAM, ROM, or flash memory, or a magnetic disc, or any other types of memories.

Data required for the removal of the first coating layer 93 may be input to the controller 8 via the inputter 86, or input to the controller 8 from another computer via the communication circuit 84, or calculated or deduced by the controller 8. The data required for the removal of the first coating layer 93 is stored in the memory 82 (e.g., workpiece data 826a including data indicating a thickness of the first coating layer 93, data 826b indicating a position and a size of the stripping target region RT, characteristics data 826c of an obstacle between the stripping target region RT and the laser head 51, a laser output parameter 826d, a feed rate command 826e for the laser head 51, and first route data 826f defining a first travel route the remover 5 such as the laser head 51 is to follow).

Data required for the burring may be input to the controller 8 via the inputter 86, or input to the controller 8 from another computer via the communication circuit 84, or calculated or deduced by the controller 8. The data required for the burring is stored in the memory 82 (e.g., workpiece data 826a, and second route data 826g defining a second travel route the burring tool 10 is to follow).

Data required for the tapping may be input to the controller 8 via the inputter 86, or input to the controller 8 from another computer via the communication circuit 84, or calculated or deduced by the controller 8. The data required for the tapping is stored in the memory 82 (e.g., workpiece data 826a, and third route data 826h defining a third travel route the tapping tool 18 is to follow). In the case where the memory 82 stores data that specifies a length of a flange 97 in the direction along the center axis of a through hole 96, the controller 8 may deduce third route data 826h (e.g., third route data 826h defining an insertion depth of the tapping tool 18 into the first wall 99a) based on this data. In the case where the memory 82 stores data that specifies a tool diameter of the burring tool 10, the controller 8 may deduce a length of a flange 97 in the direction along the center axis of the through hole 96 based on this data.

The inputter 86 is not limited to the display 862 with a touchscreen. For example, the controller 8 may include an inputter 86 such as a button, switch, lever, pointing device, keyboard, and so on, and a display that presents the data input from the inputter 86 or other information. A plurality of computers may cooperate to function as the controller 8. The memory 82 may be distributed in several locations. For example, a part of the memory 82 may be included in a cloud storage.

The processor 80 of the controller 8 executes the program 822 stored in the memory 82, so that the controller 8 generates control commands. The communication circuit 84 sends the control commands to control targets (more specifically, the rotational driver 36, mover 4, remover 5 such as the laser irradiator 50a, second rotational driver 25, tool changer 6, etc.). The processor 80 executing the program 822 thus allows the controller 8 to control the rotational driver 36, mover 4, remover 5 such as the laser irradiator 50a, second rotational driver 25, and tool changer 6.

In the example depicted in FIG. 24, the memory 82 stores workpiece data 826a. The workpiece data 826a includes, for example, shape data of the workpiece 9, data specifying a position of the through hole 96 to be formed by the burring, and data specifying a size of the through hole 96 to be formed by the burring (e.g., data specifying the inside diameter of the through hole 96). The workpiece data 826a may also include data specifying a length of the flange to be formed by the burring.

The controller 8 may deduce the position and size of the stripping target region RT based at least on the workpiece data 826a (more specifically, shape data of the workpiece 9, data specifying the position of the through hole 96 to be formed by the burring, and data specifying the size of the through hole 96 to be formed by the burring). The controller may then store the deduced data 826b indicating the position and size of the stripping target region RT in the memory 82.

The controller 8 may deduce a first travel route the remover 5 such as the laser head 51 is to follow based on the data 826b indicating the position and size of the stripping target region RT, and store the deduced first route data 826f indicating the first travel route in the memory 82.

Further, the controller 8 may generate a first motion command S1 based on the first route data 826f, and send the first motion command S1 to the mover 4 so that the remover 5 such as the laser head 51 moves along the first travel route. The mover 4 that receives the first motion command S1 moves the remover 5 such as the laser head 51 along the first travel route. Thus, the first coating layer 93 in the stripping target region RT is removed.

In the above-described example, the position and the size of the stripping target region RT, and the first travel route, are automatically deduced by the controller 8 based on the workpiece data 826a, so that the operator need not input the data to the controller 8. This reduces the operator's workload and helps to avoid the production of defective workpieces due to operator input errors.

In the example depicted in FIG. 24, the memory 82 stores workpiece data 826a. The workpiece data 826a includes, for example, shape data of the workpiece 9, data specifying a position of the through hole 96 to be formed by the burring, material data of the base material 91, thickness data of the base material 91, material data of the first coating layer 93, and thickness data of the first coating layer 93.

The controller 8 may determine a laser output parameter 826d based at least on the workpiece data 826a, and store the determined laser output parameter 826d in the memory 82. The laser output parameter 826d includes, for example, power, pulse frequency, duty ratio, and focal length. The controller 8 may determine a feed rate command for the laser head 51 based at least on the workpiece data 826a, and store the determined feed rate command 826e in the memory 82.

The controller 8 may determine a laser output parameter based at least on the characteristics data 826c of an obstacle (e.g., above-described second wall 99b) between the stripping target region RT and the laser head 51, and store the determined laser output parameter 826d in the memory 82. The controller 8 may determine a feed rate command for the laser head 51 based at least on the characteristics data 826c of the obstacle (e.g., above-described second wall 99b) between the stripping target region RT and the laser head 51, and store the determined feed rate command 826e in the memory 82. The characteristics data 826c of the obstacle between the stripping target region RT and the laser head 51 includes, for example, at least one of the presence or absence of an obstacle, the thickness of the obstacle, and the material of the obstacle.

For example, when there is an obstacle (e.g., the above-described second wall 99b) between the stripping target region RT and the laser head 51, this obstacle need to be removed by the laser. In this case, it is preferable to relatively increase the laser output, or to relatively decrease the feed rate of the laser head 51.

For example, the laser output may be relatively increased, or the feed rate of the laser head 51 may be relatively decreased, proportionally to the thickness of the obstacle between the stripping target region RT and the laser head 51.

For example, when the obstacle between the stripping target region RT and the laser head 51 is made of a material that is easily melted away by the laser (e.g., material having a high laser absorption rate, or material having a low melting point), the laser output may be relatively reduced, or the feed rate of the laser head 51 may be relatively increased.

The controller 8 may determine a laser output parameter based at least on both of the workpiece data 826a and the characteristics data 826c of the obstacle (e.g., above-described second wall 99b) between the stripping target region RT and the laser head 51, and store the determined laser output parameter 826d in the memory 82. The controller 8 may determine a feed rate command for the laser head 51 based at least on both of the workpiece data 826a and the characteristics data 826c of the obstacle (e.g., above-described second wall 99b) between the stripping target region RT and the laser head 51, and store the determined feed rate command 826e in the memory 82.

In the above-described example, the controller 8 automatically deduces at least one of a laser output parameter 826d and a feed rate command 826e for the laser head 51 based at least on one of the workpiece data 826a and the characteristics data 826c of the obstacle (e.g., above-described second wall 99b) between the stripping target region RT and the laser head 51. Thus, the operator's workload is reduced.

### (Removal Mode M1)

The controller 8 can implement a removal mode M1 by controlling the remover 5 (more specifically, laser irradiator 50a) and the mover 4. The removal mode M1 is a mode in which removal means such as the laser B, chemical liquid L, or second tool T2 is applied to the first coating layer 93 as illustrated in FIG. 2 and FIG. 12 to FIG. 15 so that the first coating layer 93 is removed from the first region RG1 of the plate portion 90. One example in which the laser B is applied to the first coating layer 93 is described below.

For example, in the example depicted in FIG. 17 or FIG. 26, the controller 8 that executes the program 822 (more specifically, first program 822a) sends the above-described laser output parameter 826d and emission command E1 to the laser irradiator 50a. The controller 8 that executes the program 822 (more specifically, first program 822a) sends the first motion command S1 to the mover 4 based on the feed rate command 826e for the laser head 51 and the first route data 826f stored in the memory 82.

The laser irradiator 50a that receives the laser output parameter 826d and emission command E1 emits the laser toward the stripping target region RT with an output corresponding to the laser output parameter 826d. The mover 4 that receives the first motion command S1 moves the laser head 51 along the first travel route. Thus, the first coating layer 93 is removed from the first region RG1 of the plate portion 90. When there is an obstacle (e.g., second wall 99b) on the laser emission axis of the laser head 51, this obstacle is removed by the laser being emitted toward the stripping target region RT.

### (Inversion Mode M2)

The controller 8 can implement an inversion mode M2 by controlling the work holder 2 (more specifically, the second rotational driver 25).

For example, in the example depicted in FIG. 19 or FIG. 27, the controller 8 that executes the program 822 (more specifically, second program 822b) sends an inversion command RW to the second rotational driver 25. The second rotational driver 25 that receives the inversion command RW inverts the workpiece 9. More specifically, the second rotational driver 25 that receives the inversion command RW rotates the first chuck 21 and second chuck 23 180° about the axis AT parallel to the longitudinal direction of the workpiece 9, to invert the workpiece 9.

### (Burring Mode M3)

The controller 8 can implement a burring mode M3 by controlling the rotational driver 36 and the mover 4.

For example, in the example depicted in FIG. 20 or FIG. 28, the controller 8 that executes the program 822 (more specifically, third program 822c) sends the first rotation command R1 to the rotational driver 36. The controller 8 that executes the program 822 (more specifically, third program 822c) sends the second motion command S2 to the mover 4 based on the second route data 826g stored in the memory 82.

The rotational driver 36 that receives the first rotation command R1 rotates the burring tool 10 about the center axis extending along the longitudinal direction of the burring tool 10. More specifically, the rotational driver 36 that receives the first rotation command R1 rotates the rotating body 31 of the machining head 30 about the first axis AX1, to rotate the burring tool 10 about the rotation axis AX. The mover 4 that receives the second motion command S2 moves the burring tool 10 along the second travel route. More specifically, the first driver 41b that receives the second motion command S2 moves the machining head 30 along the Z-axis direction, to move the burring tool 10 along the second travel route. Thus, the rotating burring tool 10 burs the first region RG1 of the plate portion 90. In other words, a through hole 96 and a flange 97 are formed in the first region RG1 of the plate portion 90 by the rotating burring tool 10.

### (Tool Change Mode M4)

The controller 8 can implement a tool change mode M4 for changing the burring tool 10 held on the machining head 30 to the tapping tool 18. The controller 8 implements the tool change mode M4 by controlling the mover 4 and tool changer 6.

For example, in the example depicted in FIG. 21, the controller 8 that executes the program 822 (more specifically, fourth program 822d) sends the motion command S4 to the mover 4. The controller 8 that executes the program 822 (more specifically, fourth program 822d) sends the tool change command C1 to the tool changer 6. The mover 4 that receives the motion command S4 moves the machining head 30 to the tool change position P1. The tool changer 6 that receives the tool change command C1 changes the burring tool 10 held on the machining head 30 to the tapping tool 18.

### (Tapping Mode M5)

The controller 8 can implement a tapping mode M5 by controlling the rotational driver 36 and the mover 4.

For example, in the example depicted in FIG. 22 or FIG. 29, the controller 8 that executes the program 822 (more specifically, fifth program 822e) sends a second rotation command R2 to the rotational driver 36. The controller 8 that executes the program 822 (more specifically, fifth program 822e) sends the third motion command S3 to the mover 4 based on the third route data 826h stored in the memory 82.

The rotational driver 36 that receives the second rotation command R2 rotates the tapping tool 18 about the center axis extending along the longitudinal direction of the tapping tool 18. More specifically, the rotational driver 36 that receives the second rotation command R2 rotates the rotating body 31 of the machining head 30 about the first axis AX1, to rotate the tapping tool 18 about the rotation axis AX. The mover 4 that receives the third motion command S3 moves the tapping tool 18 along the third travel route. More specifically, the first driver 41b that receives the third motion command S3 moves the machining head 30 along the Z-axis direction, to move the tapping tool 18 along the third travel route. The internal threads 96s are thus formed on the wall surface 96w, which defines the through hole 96, by the rotating tapping tool 18.

### (Workpiece Processing Method)

The workpiece processing method in the embodiment may include, prior to the execution of the above-described removal step (second step ST2), the step of determining at least one of the laser output parameter 826d and the feed rate command 826e for the laser head 51 by the controller 8 based on the workpiece data 826a and/or the characteristics data 826c of the obstacle (e.g., above-described second wall 99b) between the stripping target region RT and the laser head 51 stored in the memory 82. The workpiece processing method in the embodiment may further include the step of storing the determined laser output parameter 826d and/or feed rate command 826e for the laser head 51 in the memory 82.

The above-described removal step (second step ST2) may include generating the above-described first motion command S1 by the controller 8 based at least on the above-described first route data 826f stored in the memory 82. The above-described removal step (second step ST2) may include generating the above-described first motion command S1 by the controller 8 based at least on the above-described first route data 826f, as well as the above-described feed rate command 826e for the laser head 51 stored in the memory 82.

The above-described removal step (second step ST2) may include moving the laser head 51 along the first travel route at a feed rate corresponding to the feed rate command 826e by the mover 4 that receives the above-described first motion command S1 from the controller 8. The removal step may also include emitting a laser with an output corresponding to the laser output parameter 826d toward the stripping target region RT from the laser irradiator 50a that receives the above-described laser output parameter 826d and emission command E1 from the controller 8. Thus, the first coating layer 93 in the stripping target region RT is removed.

The above-described burring step (fourth step ST4) may include generating the above-described second motion command S2 by the controller 8 based at least on the above-described second route data 826g stored in the memory 82.

The above-described burring step (fourth step ST4) may include rotating the burring tool 10 about the rotation axis AX by the rotational driver 36 that receives the first rotation command R1 from the controller 8, and moving the burring tool 10 along the second travel route by the mover 4 that receives the above-described second motion command S2. Thus, the rotating burring tool 10 penetrates across the first region RG1, from which the first coating layer 93 has been removed. As a result, a through hole 96 and a flange 97 are formed in the first region RG1 by the rotating burring tool 10.

The above-described tapping step (fifth step ST5) may include generating the above-described third motion command S3 by the controller 8 based at least on the above-described third route data 826h stored in the memory 82.

The above-described tapping step (fifth step ST5) may include rotating the tapping tool 18 about the rotation axis AX by the rotational driver 36 that receives the second rotation command R2 from the controller 8, and moving the burring tool 10 along the third travel route by the mover 4 that receives the above-described third motion command S3. Thus, the rotating tapping tool 18 moves through the through hole 96. As a result, the internal threads 96s are formed on the wall surface 96w, which defines the through hole 96, by the rotating tapping tool 18.

### (Program 822)

The program 822 in the embodiment is a program for causing the machine tool 1 (more specifically, the controller 8 of the machine tool 1) to execute at least the removal step (second step ST2) and the burring step (fifth step ST5) of the above-described workpiece processing method.

More specifically, the program 822 in the embodiment is a program for causing a machine tool 1 (more specifically, the controller 8 of the machine tool 1) to execute a workpiece processing method including: (1) a step of removing a first coating layer 93 from a first region RG1 of a plate portion 90 of a workpiece 9 supported by a work holder 2, the workpiece 9 having the plate portion 90 including a base material 91 and the first coating layer 93 that covers at least a portion of the base material 91 (removal step: second step ST2); and (2) a step of burring the plate portion 90 after the first coating layer 93 has been removed from the first region RG1 of the plate portion 90 (burring step: fourth step ST4).

As illustrated in FIG. 5, the step of burring the plate portion 90 (fourth step ST4) includes forming a through hole 96 and a flange 97 in the first region RG1 of the plate portion 90 by moving the rotating burring tool 10 in the above-described first direction DR1.

The removal step (second step ST2) and the burring step (fourth step ST4) have already been described in detail in the first embodiment or the second embodiment, and therefore repetitive descriptions of these steps will be omitted.

The program 822 in the embodiment may be a program for causing the machine tool 1 (more specifically, the controller 8 of the machine tool 1) to execute a workpiece processing method including: (1) the above-described removal step (second step ST2); (2) a step of inverting the workpiece 9 (more specifically, a step of rotating the workpiece 9 180° about an axis AT parallel to the longitudinal direction of the workpiece 9); and (3) the above-described burring step (fourth step ST4). The step of inverting the workpiece 9 is performed between the above-described removal step (second step ST2) and the above-described burring step (fourth step ST4).

The step of inverting the workpiece 9 has already been described in the first embodiment or the second embodiment, and therefore repetitive descriptions of this step will be omitted.

The program 822 in the embodiment may be a program for causing the machine tool 1 (more specifically, the controller 8 of the machine tool 1) to execute a workpiece processing method including: (1) the above-described removal step (second step ST2); (2) the above-described burring step (fourth step ST4); and (3) a step of forming internal threads 96s on a wall surface 96w, which defines a through hole 96 (tapping step: fifth step ST5).

A step of changing the burring tool 10 held on the machining head 30 to the tapping tool 18 may be performed between the above-described burring step (fourth step ST4) and the above-described tapping step (fifth step ST5).

The step of changing the burring tool 10 held on the machining head 30 to the tapping tool 18, and the tapping step (fifth step ST5), have already been described in detail in the first embodiment or the second embodiment, and therefore repetitive descriptions of these steps will be omitted.

The program 822 in the embodiment may be a program for causing the machine tool 1 (more specifically, the controller 8 of the machine tool 1) to execute a workpiece processing method including: (1) the above-described removal step (second step ST2); (2) a step of inverting the workpiece 9 (more specifically, a step of rotating the workpiece 9 180° about an axis AT parallel to the longitudinal direction of the workpiece 9); (3) the above-described burring step (fourth step ST4); (4) a step of changing the burring tool 10 held on the machining head 30 to the tapping tool 18; and (5) the above-described tapping step (fifth step ST5).

Additionally, the program 822 in the embodiment may include a subprogram for causing the controller 8 of the machine tool 1 to execute: (1) a step of deducing a position and a size of a stripping target region RT based at least on workpiece data 826a (more specifically, shape data of the workpiece 9, data specifying a position of the through hole 96 to be formed by the burring, and data specifying a size of the through hole 96 to be formed by the burring); (2) a step of deducing a first travel route a remover 5 such as the laser head 51 is to follow based on data 826b indicating a position and a size of the stripping target region RT; and (3) a step of sending a first motion command S1 to a mover 4 so that the remover 5 such as the laser head 51 moves along the first travel route.

Additionally, the program 822 in the embodiment may include a subprogram for causing the controller 8 of the machine tool 1 to execute: (1) a step of determining a laser output parameter 826d based at least on the workpiece data 826a; and (2) a step of sending an emission command E1 and the laser output parameter 826d to the laser irradiator 50a so that a laser is emitted toward the stripping target region RT with an output corresponding to the laser output parameter 826d.

Additionally, the program 822 in the embodiment may include a subprogram for causing the controller 8 of the machine tool 1 to execute: (1) a step of determining a laser output parameter 826d based at least on characteristics data 826c of an obstacle (e.g., above-described second wall 99b) between the stripping target region RT and the laser head 51; and (2) a step of sending an emission command E1 and the laser output parameter 826d to the laser irradiator 50a so that a laser is emitted toward the stripping target region RT with an output corresponding to the laser output parameter 826d.

The memory 82 in the embodiment may be a non-volatile storage medium on which the above-described program 822 is recorded. The non-volatile storage medium on which the above-described program 822 is recorded may be a portable storage medium 82M as illustrated in FIG. 30.

Obviously, the present invention is not limited to the various embodiments and modifications described above, and these embodiments or modifications thereof can be modified or changed as required within the scope of the technical concept of the present invention. Various techniques used in respective embodiments or modifications thereof may be applied to other embodiments or modifications as long as there are no technical contradictions. Optional or additional features in various embodiments and modifications can be omitted as suited.

### Reference Signs List

1, 1A, 1B ... Machine tool, 2 ... Work holder, 4 ... Mover, 5 ... Remover, 6 ... Tool changer, 8 ... Controller, 9 ... Workpiece, 9a ... Pipe, 10 ... Burring tool, 11 ... Distal end portion, 13 ... Columnar portion, 15 ... Shoulder portion, 18 ... Tapping tool, 21 ... First chuck, 22 ... Second rotating body, 23 ... Second chuck, 24 ... Third rotating body, 25 ... Second rotational driver, 25a ... First motor, 25b ... Second motor, 30 ... Machining head, 31 ... Rotating body, 33 ... Frame, 36 ... Rotational driver, 36m ... Motor, 40 ... First mover, 41a ... First movable member, 41b ... First driver, 43a ... Second movable member, 43b ... Second driver, 45b ... Third driver, 46 ... Second mover, 46m ... Motor, 50a ... Laser irradiator, 50b ... Chemical liquid applicator, 50c ... Cutting tool, 51 ... Laser head, 52 ... Laser output aperture, 53 ... Laser light source, 55 ... Optical component, 61 ... Tool changing arm, 63 ... Arm rotator, 65 ... Arm mover, 80 ... Hardware processor, 82 ... Memory, 82M ... Storage medium, 84 ... Communication circuit, 86 ... Inputter, 88 ... Bus, 90 ... Plate portion, 91 ... Base material, 91s ... Exposed surface, 93 ... First coating layer, 93a ... Plated layer, 94 ... Second coating layer, 94a ... Plated layer, 96 ... Through hole, 96s ... Internal thread, 96w ... Wall surface, 97 ... Flange, 99a ... First wall, 99b ... Second wall, 99c ... Third wall, 99d ... Fourth wall, 211 ... Gripper member, 231 ... Guide roller, 822 ... Program, 822a ... First program, 822b ... Second program, 822c ... Third program, 822d ... Fourth program, 822e ... Fifth program, 826 ... Data, 826a ... Workpiece data, 826b ... Data indicating the position and size of the stripping target region, 826c ... Characteristics data of the obstacle, 826d ... Laser output parameter, 826e ... Feed rate command, 826f ... First route data, 826g ... Second route data, 826h ... Third route data, 862 ... Display with a touchscreen, AT ... Axis parallel to the longitudinal direction of the workpiece, AX ... Rotation axis, AX1 ... First axis, AX2 ... Second axis, B ... Laser, C1 ... Tool change command, E1 ... Emission command, G ... Assist gas, HD1 ... First tool holder, HD2 ... Second tool holder, L ... Chemical liquid, M1 ... Removal mode, M2 ... Inversion mode, M3 ... Burring mode, M4 ... Tool change mode, M5 ... Tapping mode, OP ... Access opening, OP1 ... Through opening, OP2 ... Slit opening, P1 ... Tool change position, R ... Rotation command, R1 ... First rotation command, R2 ... Second rotation command, RB ... Stripped region, RG1 ... First region, RT ... Stripping target region, RW ... Inversion command, S ... Motion command, S1 ... First motion command, S2 ... Second motion command, S3 ... Third motion command, S4 ... Motion command, SP ... Internal region, SP1 ... Internal space, T1 ... Tool for applying chemical liquid, T2 ... Second tool

## Claims

1. A workpiece processing method comprising:
preparing a workpiece having a plate portion including a base material and a first coating layer that covers at least a portion of the base material;
burring the plate portion,
the burring of the plate portion including forming a through hole and a flange in a first region of the plate portion by moving a burring tool in a rotating state in a first direction, the first direction being defined as a direction from the base material toward the first coating layer; and
removing the first coating layer from the first region of the plate portion prior to the burring of the plate portion.

2. The workpiece processing method according to claim 1, wherein the first coating layer is a plated layer of pure zinc or zinc alloy.

3. The workpiece processing method according to claim 1 or 2, wherein the through hole and the flange are formed simultaneously during the burring of the plate portion.

4. The workpiece processing method according to any one of claims 1 to 3, wherein the removing of the first coating layer includes removing the first coating layer from the first region of the plate portion by irradiating the first coating layer with a laser.

5. The workpiece processing method according to any one of claims 1 to 4, further comprising forming internal threads in a wall surface that defines the through hole.

6. The workpiece processing method according to any one of claims 1 to 5, wherein the first coating layer faces an internal region of the workpiece.

7. The workpiece processing method according to any one of claims 1 to 6, wherein the plate portion includes a second coating layer that covers at least a portion of the base material on one side in a second direction of the base material, the second direction being defined as a direction opposite to the first direction, and wherein
the burring of the plate portion includes causing the burring tool in the rotating state to move in the first direction to penetrate across the second coating layer and the base material successively.

8. The workpiece processing method according to any one of claims 1 to 7, further comprising inverting the workpiece prior to the burring of the plate portion, after the first coating layer has been removed from the first region of the plate portion.

9. The workpiece processing method according to any one of claims 1 to 8, wherein the workpiece includes a first wall where the first region is positioned, and a second wall positioned opposite the first wall,
the second wall being formed with an access opening positioned opposite the first region.

10. The workpiece processing method according to claim 9, wherein the access opening is smaller in size than a stripped region that is defined as a region formed by removing the first coating layer.

11. A machine tool comprising:
a work holder configured to support a workpiece having a plate portion including a base material and a first coating layer that covers at least a portion of the base material;
a machining head configured to support a burring tool in a manner rotatable about a rotation axis;
a rotational driver configured to rotate the burring tool about the rotation axis;
a mover configured to move the machining head relative to the work holder;
a remover configured to remove a portion of the first coating layer from the workpiece; and
a controller configured to control the rotational driver, the mover, and the remover, the controller being configured to implement:
a removal mode in which the first coating layer is removed from a first region of the plate portion by sending a control command at least to the remover; and
a burring mode in which the plate portion is burred by sending a control command at least to the rotational driver and the mover,
the burring mode being a mode in which a through hole and a flange are formed in the first region from which the first coating layer has been removed, using the burring tool moving in a first direction in a rotating state, the first direction being defined as a direction from the base material toward the first coating layer.

12. The machine tool according to claim 11, wherein the remover includes a laser irradiator that has a laser head, and wherein
the removal mode includes sending an emission command from the controller to the laser irradiator so that the first coating layer is removed from the first region of the plate portion by a laser emitted from the laser head.

13. The machine tool according to claim 12, wherein the controller is configured to determine at least one of a laser output parameter and a feed rate command for the laser head based at least on characteristics data of an obstacle between a stripping target region and the laser head, the stripping target region being defined as a portion of an area covered by the first coating layer to be removed by the remover.

14. The machine tool according to claim 11 or 12, wherein the controller is configured to:
deduce a position and a size of a stripping target region based at least on workpiece data, the stripping target region being defined as a portion of an area covered by the first coating layer to be removed by the remover;
deduce a first travel route the remover is to follow based on data indicating the position and the size of the stripping target region; and
send a first motion command to the mover so that the remover moves along the first travel route.

15. A program for causing a machine tool to execute a workpiece processing method including:
removing a first coating layer from a first region of a plate portion of a workpiece supported by a work holder, the workpiece having the plate portion including a base material and the first coating layer that covers at least a portion of the base material; and
burring the plate portion after the first coating layer has been removed from the first region of the plate portion, wherein
the burring of the plate portion includes forming a through hole and a flange in the first region of the plate portion by moving a burring tool in a rotating state in a first direction, the first direction being defined as a direction from the base material toward the first coating layer.
